# EUROPÄISCHE PATENTSCHRIFT

(11) **EP 3 857 319 B1**
(45) Veröffentlichungstag und Bekanntmachung des Hinweises auf die Patenterteilung: **18.09.2024**
(21) Anmeldenummer: 19779443.1
(22) Anmeldetag: 25.09.2019
(51) Int. Cl.: G05B 19/4093

(54) **SCHACHTELN VON WERKSTÜCKEN FÜR SCHNEIDPROZESSE EINER FLACHBETTWERKZEUGMASCHINE**
NESTING OF WORKPIECES FOR CUTTING PROCESSES OF A FLAT-BED MACHINE TOOL
IMBRICATION DE PIÈCES POUR DES PROCESSUS DE COUPE D'UNE MACHINE-OUTIL À BANC PLAT

(30) Priorität: 29.09.2018 DE 102018124146
(43) Veröffentlichungstag der Anmeldung: 04.08.2021
(73) Patentinhaber: TRUMPF Werkzeugmaschinen SE + Co. KG, 71254 Ditzingen (DE)
(72) Erfinder: STRUCKMEIER, Frederick, 76185 Karlsruhe (DE)
(74) Vertreter: Trumpf Patentabteilung
(86) Internationale Anmeldenummer: PCT/EP2019/075937
(87) Internationale Veröffentlichungsnummer: WO 2020/064877

(56) Entgegenhaltungen:
- US-A- 5 748 762
- US-A1- 2012 109 352
- ANONYMOUS: "ProNest 8.0 User manual", 1 October 2006 (2006-10-01), US, pages 1 - 267, XP055559950, Retrieved from the Internet <URL:https://www.scribd.com/doc/100939276/ProNest-8-Manual> [retrieved on 20190221]
- S. Q. XIE ET AL: "Nesting of two-dimensional irregular parts: an integrated approach", INTERNATIONAL JOURNAL OF COMPUTER INTEGRATED MANUFACTURING., vol. 20, no. 8, 1 December 2007 (2007-12-01), GB, pages 741 - 756, XP055652396, ISSN: 0951-192X, DOI: 10.1080/09511920600996401
- YUNQING RAO ET AL: "An Improved Hierarchical Genetic Algorithm for Sheet Cutting Scheduling with Process Constraints", THE SCIENTIFIC WORLD JOURNAL, vol. 6, no. 2, 1 January 2013 (2013-01-01), pages 161 - 10, XP055151000, DOI: 10.1155/2013/202683
- WODZIAK JOHN R. ET AL: "A genetic algorithm for optimizing multiple part placement to reduce build time", 1 January 1994 (1994-01-01), Clemson University, Clemson SC 29634, XP055381913, Retrieved from the Internet <URL:https://www.researchgate.net/profile/Georges_Fadel/publication/264873211_A_genetic_algorithm_for_optimizing_multiple_part_placement_to_reduce_build_time/links/5565dfbd08aefcb861d19140.pdf> [retrieved on 20170615]

## Beschreibung

Die vorliegende Erfindung betrifft ein Schachtelungsverfahren für mit einer Flachbettwerkzeugmaschine zu schneidende Werkstücke, insbesondere ein Verfahren zur Erzeugung eines Schachtelungsplans für eine Ansteuerung eines Schneidprozesses einer Flachbettwerkzeugmaschine, z. B. einer Flachbett-Laserschneidemaschine.

In der blechverarbeitenden Industrie ist das Verschachteln von zu schneidenden Werkstücken auf einer Rohmaterialtafel Teil des Produktionsprozesses, wobei das Verschachteln zu einem spezifischen Layout von Schneidlinien führt. Hierin wird das Ergebnis einer Verschachtelung auch als Schachtelungsplan bezeichnet.

Derartige 2D-Schachtelprobleme werden bei Flachbett-Laserschneidemaschinen primär hinsichtlich der Minimierung des einzusetzenden Rohmaterials gelöst, da das Rohmaterial in der Regel einen erheblichen Teil der Gesamtkosten ausmacht. Allerdings wirken sich auch weitere Aspekte auf die Gesamtkosten aus, beispielsweise Verzögerungen des Schneidprozesses oder ein längerer Stillstand der Flachbettwerkzeugmaschine aufgrund von Service oder Reparatur. In diesem Zusammenhang offenbart z. B. US 2012/0109352 A1 ein Verfahren zum Erzeugen von Nesting-Daten unter Vermeidung eines Überlappens eines Schneidpfads mit Lagerungserhebungen, um insbesondere Schäden an der Lagerung zu reduzieren. Des Weiteren offenbart CN 105740953 A eine Werkstückschachtelung, z. B. bei Stanzbearbeitungen, basierend auf einem quantenevolutionären Algorithmus. Ferner offenbart EP 2 029 313 A1 eine Optimierung einer Werkstückauflage hinsichtlich des Verschleißes von Tragpunktspitzen und einer Gewährleistung einer Gut- und Restteilablage.

Hintergrund zu Schachtelungs-(Nesting-)Ansätzen, insbesondere für Nonfit-Polygone, ist in "The geometry of nesting problems: A tutorial", by J. A. Bennell et. al., European Journal of Operational Research 184 (2008) 397-415 zusammengefasst.

Aus "ProNest 8.0 User manual", Oktober 2006, Seiten 1-267 ist ein Programm zur Erzeugung eines Schachtelungsplans bekannt.

Aus US 2012/109352 A1 Gerät zur Erzeugung von Schachtelungsdaten bekannt.

Einem Aspekt dieser Offenbarung liegt die Aufgabe zugrunde, einen Schachtelungsplan für eine Mehrzahl von zu schneidenden Werkstücken anzugeben, der Herstellungskosten reduziert, insbesondere mit Blick auf Materialkosten und schneidprozessorientierte Kosten.

Zumindest eine dieser Aufgaben wird gelöst durch ein Verfahren zur Erzeugung eines Schachtelungsplans nach Anspruch 1 und durch ein Verfahren zur Bestimmung eines schneidprozessorientierten Schachtelungsplans nach Anspruch 14. Weiterbildungen sind in den Unteransprüchen angegeben. Die Verfahren werden als computerimplementierte Verfahren beansprucht.

In einem Aspekt wird ein Verfahren zur Erzeugung eines Schachtelungsplans für eine Ansteuerung eines Schneidprozesses einer Flachbettwerkzeugmaschine zum Ausschneiden von Werkstücken aus einer Materialtafel offenbart. Dabei umfasst der Schachtelungsplan eine überlappungsfreie Anordnung von den Werkstücken entsprechenden Teilräumen in einem zweidimensionalen Planungsraum sowie eine räumliche Anordnung von vorbestimmten Auflageräumen, wobei die Auflageräume Lagerungsoberflächenbereichen der Materialtafel entsprechen, die während des Schneidprozesses gelagert sind. Das Verfahren umfasst ein
Bereitstellen von Schneidprozessdaten umfassend
   - Geometriedaten des Planungsraums, in dem die Teilräume angeordnet werden können,
   - Positionsdaten, die die Positionen der Auflageräume im Planungsraum angeben,
   - eine Mehrzahl von Teilräumen, die jeweils einem Werkstücktyp entsprechen, und
   - Anzahldaten, die Stückzahlen der im Planungsraum zu schachtelnden Teilräume angeben sowie ein
Bereitstellen von Schachtelungseingangsparametern umfassend
   - einen Werkstückmindestabstand, der mindestens zwischen zwei benachbarten, im Planungsraum angeordneten Teilräumen vorzuliegen hat,
   - eine Einfügereihenfolge, nach der die Teilräume bei einer sequenziellen Erzeugung des Schachtelungsplans eingefügt werden, und
   - eine Anordnungsvorschrift, gemäß der die Teilräume im Planungsraum nacheinander räumlich angeordnet werden.

Verfahrensgemäß erfolgt ein Anordnen eines ersten Teilraums gemäß der Einfügereihenfolge und der Anordnungsvorschrift im Planungsraum; und ein sequenzielles Einfügen weiterer Teilräume gemäß der Einfügereihenfolge und der Anordnungsvorschrift im Planungsraum, wobei die Anordnungsvorschrift einem neu eingefügten Teilraum im Planungsraum jeweils eine Ausgangslage zuordnet, in der mindestens ein Punkt des Teilraums im Werkstückmindestabstand von einem anderen bereits eingefügten Teilraum angeordnet ist (d. h. mit anderen Worten, dass bis auf diese Punkte alle anderen Punkte des Teilraums weiter entfernt liegen). Die Anordnungsvorschrift umfasst ferner ein Durchführen, nach jedem neuen Einfügen eines Teilraums, einer Packungsdichtenbewertung und mindestens einer die Positionsdaten einbeziehenden Bewertung der jeweiligen Ausgangslage des neu eingefügten Teilraums, ein Aufspannen, in Abhängigkeit eines Bewertungsergebnisses der Ausgangslage des neu eingefügten Teilraums, eines, insbesondere variabelen und/oder gewichtungsabhängigen, lokalen Suchraums, der für den neu eingefügten Teilraum mindestens eine Alternativlage umfasst; ein Bewerten der mindestens einen Alternativlage mit der Packungsdichtenbewertung und der mindestens einen die Positionsdaten einbeziehenden Bewertung und ein Vergleichen der Bewertungsergebnisse der Ausgangslage und der mindestens einen Alternativlage, um spezifisch für die Einfügereihenfolge eine der bewerteten Lagen als Schneidlage für den neu eingefügten Teilraum im Schachtelungsplan festzulegen.

In einem weiteren Aspekt umfasst ein entsprechendes Verfahren zur Erzeugung eines Schachtelungsplans für eine Ansteuerung eines Schneidprozesses einer Flachbettwerkzeugmaschine die Schritte:
sequenzielles Anordnen von Teilräumen gemäß einer Einfügereihenfolge und einer Anordnungsvorschrift im Planungsraum, wobei die Anordnungsvorschrift einem neu eingefügten Teilraum im Planungsraum jeweils eine Ausgangslage zuordnet, in der mindestens ein Punkt des Teilraums im Werkstückmindestabstand von einem anderen bereits eingefügten Teilraum angeordnet ist (d. h. mit anderen Worten, dass bis auf diese Punkte alle anderen Punkte des Teilraums weiter entfernt liegen),
Bewerten der mindestens einen Alternativlage mit einer Packungsdichtenbewertung und mindestens einer die Positionsdaten einbeziehenden Bewertung,
Aufspannen, in Abhängigkeit eines Bewertungsergebnisses der Ausgangslage eines neu eingefügten Teilraums, eines lokalen Suchraums, der für den neu eingefügten Teilraum mindestens eine Alternativlage umfasst,
Bewerten der mindestens einen Alternativlage mit der Packungsdichtenbewertung und der mindestens einen die Positionsdaten einbeziehenden Bewertung und
Vergleichen der Bewertungsergebnisse der Ausgangslage und der mindestens einen Alternativlage, um spezifisch für die Einfügereihenfolge eine der bewerteten Lagen als Schneidlage für den neu eingefügten Teilraum im Schachtelungsplan festzulegen.

In einem weiteren Aspekt umfasst ein Verfahren zur Bestimmung eines schneidprozessorientierten Schachtelungsplans für eine Ansteuerung eines Schneidprozesses einer Flachbettwerkzeugmaschine zum Ausschneiden von Werkstücken aus einer Materialtafel die Schritte:
Bereitstellen einer Mehrzahl von Einfügereihenfolgen der Teilräume, wobei die Einfügereihenfolgen Gene einer ersten Generation eines evolutionären Algorithmus darstellen,
Erzeugen eines Schachtelungsplans für jede der Einfügereihenfolgen mit einem wie zuvor beschriebenen Verfahren, sodass in den Schachtelungsplänen die Teilräume an entsprechend für die jeweilige Einfügereihenfolge festgelegten Schneidlagen angeordnet sind,
Erstellen einer Gesamtbewertung für jeden der Schachtelungspläne basierend auf den Packungsdichtenbewertungen und den mindestens einen die Positionsdaten einbeziehenden Bewertungen der Schneidlagen des jeweiligen Schachtelungsplans, wobei die Gesamtbewertungen die Anwendung einer Fitnessfunktion auf die Gene des evolutionären Algorithmus darstellen,
wiederholtes Erstellen weiterer Einfügereihenfolgen durch Mutation, Crossover und/oder Selektion bestehender Einfügereihenfolgen unter Verwendung der bestehenden Gesamtbewertungen, Erzeugen weiterer Schachtelungspläne nach dem zuvor beschriebenen Verfahren und Erstellen von weiteren Gesamtbewertungen für die weiteren Einfügereihenfolgen, und
Vergleichen der Gesamtbewertungen, um den schneidprozessorientierten Schachtelungsplan aus der Menge der erzeugten Schachtelungspläne auszuwählen.

In einigen Weiterbildungen wird ferner ein Schachtelungsplans, der die an den Schneidlagen angeordneten Teilräume umfasst, ausgegeben. Ein Teilraum kann durch eine Kontur und optional einen Rotationszustand im zweidimensionalen Planungsraum der Planungstafel definiert werden. Der Werkstückmindestabstand kann spezifisch für ein zu schneidendes Material und für einen Schneidvorgang bereitgestellt werden und insbesondere abhängig von Parametern des Materials und des Schneidprozesses vorbestimmt sein. Der Werkstückmindestabstand kann hinsichtlich der geschachtelten Alternativlagen und zugleich hinsichtlich der Schneidlinien im Rahmen eines Laserschneidprozesses umgesetzt werden. Dass ein oder mehrere Punkte, die üblicherweise auf der Kontur des Teilraums liegen, einen Mindestabstand aufweisen, bedeutet, dass bis auf diese Punkte alle anderen Punkte des Teilraums weiter von bereits zugeordneten Teilräumen (den in diesen liegenden Punkte) entfernt liegen). Mit anderen Worten bedeutet die Nebenbedingung des Mindestabstand, dass kein Punkt eines Teilraums näher an einem Punkt eines anderen Teilraums liegt, als durch den Mindestabstand gegeben ist. Dies ist für alle erlaubten Lagen von Teilräumen erfüllt, wobei die Ausgangslage die zusätzliche Bedingung erfüllt, dass mindestens ein Punkt des Teilraums im Werkstückmindestabstand von einem anderen bereits eingefügten Teilraum angeordnet ist.

Der lokale Suchraum kann eindimensional oder zweidimensional im Planungsraum ausgebildet sein und sich insbesondere im Planungsraum weg von bereits eingefügten Teilräumen erstrecken. Ferner kann der lokale Suchraum derart aufgespannt werden, dass er Alternativlagen umfasst, für deren Einnahme durch den einzufügenden Teilraum der einzufügende Teilraum von der Ausgangslage in eine nicht materialoptimierte Richtung zu verschieben ist. Ferner kann der lokale Suchraum dadurch aufgespannt werden, dass eine Alternativlage durch Anwenden einer Translations- und/oder Rotationsoperation auf die Ausgangslage oder eine andere Alternativlage, insbesondere durch Translationsoperation in eine nicht materialoptimierte Richtung erzeugt wird, wobei die Randbedingung einer überlappungsfreien Anordnung bewahrt wird.

Ferner kann der lokale Suchraum derart aufgespannt werden, dass in der Alternativlage der neu eingefügte Teilraum in mindestens einer Richtung einen größeren Abstand von einem bereits eingefügten Teilraum aufweist als der neu eingefügte Teilraum in der Ausgangslage, und/oder dass in der Alternativlage der neu eingefügte Teilraum in mindestens einer Richtung von der Ausgangslage verschoben wurde und überlappungsfrei hinsichtlich bereits eingefügter Teilräume ist. Ferner kann der Anordnungsvorschrift mindestens eine Annäherungsrichtung zugeordnet sein, und der lokale Suchraum derart aufgespannt werden, dass in der Alternativlage der neu eingefügte Teilraum in einer Richtung entgegen mindestens einer der mindestens einen Annäherungsrichtung von der Ausgangslage verschoben ist.

Der Suchraum kann ferner durch mindestens einige der möglichen Positionen eines Druckpunkts auf einer Kontur eines zu bewertenden Teilraums aufgespannt werden.

In einigen Ausführungsformen kann ferner die Anordnung des ersten Teilraums mithilfe der die Positionsdaten einbeziehenden Bewertung an die Positionsdaten durch eine Translations-und/oder Rotationsoperation angepasst werden.

Verfahrensgemäß können ferner die Positionsdaten erfasst werden durch
eine Sensorik der Flachbettwerkzeugmaschine, insbesondere einer kapazitiven Abstandssensorik zur Abstandsdetektion zwischen Düse und Materialtafel, wobei zumindest eine Untergruppe der Auflagestege und/oder der Stegspitzen erfasst wird und optional die Positionen nichterfasster Auflagestege und/oder Stegspitzen durch Interpolation berechnet werden,
eine optische Sensorik, die auf mindestens einem der folgenden Verfahren basiert: Bildverarbeitungsverfahren basierend auf einer Flächenbildaufnahme, einem Laserlichtschnitt-Verfahren, einem Streifenlichtprojektions-Verfahren, einer Lichtfeldkamera, einer TOF-Kamera, insbesondere zur Tiefenerfassung von Stegvertiefungen, der Zustandserfassung der geometrischen Form für eine begleitende Beurteilung von Verschleiß eines Auflagestegs und/oder einer Stegspitze, und/oder
eine Ultraschallsensorik, welche Ultraschallsensoren insbesondere an einem Schneidkopf der Flachbettwerkzeugmaschine einsetzt.

In einigen Ausführungsformen können mehrere die Positionsdaten einbeziehenden Bewertungen für eine zu bewertende Lage des Teilraums vorgenommen werden und die Bewertungswerte dieser Bewertungen und der Packungsdichtenbewertung können mit Gewichtungen zur Bestimmung eines Bewertungswerts der zu bewertenden Lage des Teilraums kombiniert werden. Dabei können die Gewichtungen gewählt werden, um eine bestimmte Charakteristik des Schachtelungsplans zu erzielen. Ferner kann der lokale Suchraum in seiner Größe durch die Gewichtungen variabel einstellbar sein.

Erfindungsgemäß werden den Auflageräumen mithilfe der Positionsdaten Abschnitte der Kontur oder Positionen entlang der Kontur zur Bewertung eines in einer Alternativlage positionierten Teilraums zugeordnet und ein Bewertungswert in Abhängigkeit des Ausmaßes der zugeordneten Abschnitte der Kontur oder Positionen entlang der Kontur für den Auflageraum bestimmt. Dabei können weiteren Lagerungsräume im Planungsraum identifiziert werden und diesen, mithilfe der Positionsdaten, Abschnitte der Kontur oder Positionen entlang der Kontur zur Bewertung eines in einer Alternativlage positionierten Teilraums zugeordnet werden. Die Bewertungswerte für die Lagerungsräume können dann in Abhängigkeit des Umfangs der den weiteren Lagerungsräumen zugeordneten Abschnitte der Kontur oder Positionen entlang der Kontur bestimmt werden. Die Bewertungswerte der Auflageräume und der weiteren Lagerungsräume können mit Gewichtungen kombiniert werden, um einen Bewertungswert für eine zu bewertende Lage des Teilraums zu gewinnen.

Weitere Aspekte umfassen ein Computerprogramm (oder ein Computerprogrammprodukt) und ein computerlesbares Medium, auf dem ein entsprechendes Computerprogramm gespeichert ist. Das Computerprogramm/Computerprogrammprodukt umfasst Befehle, die bei der Ausführung des Programms durch einen Computer, insbesondere durch eine computerimplementierte Steuerungseinheit zum Betreiben einer Flachbettwerkzeugmaschine oder einer Planungseinheit, den Computer/die Steuerungseinheit dazu veranlassen, die hierin beschriebenen Verfahren zur Erzeugung eines (schneidprozessorientierten) Schachtelungsplans auszuführen/zu veranlassen.

Das Computerprogramm/ Computerprogrammprodukt und das computerlesbares Medium sind entsprechend zum Ausführen einer der zuvor genannten Verfahren vorgesehen. Das Computerprogramm kann auf einem nicht-flüchtigen Speicher, der insbesondere als Teil einer Steuerungseinheit zum Betreiben einer Flachbettwerkzeugmaschine oder einer Planungseinheit verwendet wird, abgelegt sein.

Die hierein beschriebenen Konzepte können vorteilhaft hinsichtlich eines verringerten Verschleißes der Auflagestege, einer Erhöhung der Teilequalität, einer Reduzierung von Ausschussteilen und kürzeren Schnittzeiten sein. Ferner kann eine erhöhte Prozesssicherheit erreicht werden, die von einem verringerten Wartungsaufwand begleitet wird. Allgemein können durch die erreichte Schachtelung die Kosten des Schneidprozesses reduziert oder sogar minimiert werden.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Flachbettwerkzeugmaschine,
- Fig. 2: eine schematische Darstellung eines Schachtelungsplans,
- Fig. 3: ein Flussdiagramm eines Verfahrens zur Erzeugung eines Schachtelungsplans für eine Ansteuerung eines Schneidprozesses einer Flachbettwerkzeugmaschine,
- Fig. 4A-4E: schematische Darstellungen zur Verdeutlichung von lokalen Suchen,
- Fig. 5: ein mathematisches Formelmodell einer Bewertung eines Schachtelungsplans,
- Fig. 6: ein Flussdiagramm eines Verfahrens zur Erzeugung eines schneidprozessorientierten Schachtelungsplans,
- Fig. 7A-7C: schematische Darstellungen von Schachtelungsplänen, die mit lokalen Suchen optimiert wurden,
- Fig. 8: eine schematische Darstellung zur Verdeutlichung der Berücksichtigung von Auflageräumen,
- Fig. 9: eine schematische Darstellung eines Auflagestegs,
- Fig. 10: eine schematische Darstellung einer Verschiebung eines Teilraums im Planungsraum zur Vermeidung des Überlappens mit Lagerungsräumen,
- Fig. 11: ein Flussdiagramm eines Verfahrens zur Bewertung einer Lage eines Teilraums unter Einbezug von Positionsdaten von Lagerungsräumen und
- Fig. 12: eine Skizze zur Verdeutlichung der gewichteten Berechnung einer Beschädigungsbewertung.

Beim Laserschneiden ist es bekannt, Werkstücke so zu schachteln, dass eine möglichst hohe Materialausnutzung erreicht wird und entsprechend die Menge an Verlustmaterial gering ist.

Hierin beschriebene Konzepte basieren zum Teil auf der Erkenntnis, dass ein derartiges Vorgehen die Schnittkosten nicht immer miniert, da die Lage der Teile relativ zu den Auflagestegen ebenfalls relevant für die Gesamtkosten sein kann. Denn in Abhängigkeit von der Lage der Teile auf der Palette kann es beispielsweise zu einem Verschleiß an Auflagestegen, beispielsweise beim Einstechen, kommen. Ferner können materialoptimierte Schachtelungen zu längeren Schnittzeiten oder Qualitätseinbußen am Teil führen, beispielsweise durch ein Abreißen des Schnittspalts bei grenzwertigen Prozessen oder durch Verschweißen bzw. Wegfliegen von Butzen. Des Weiteren kann es zu einer Verkippung von Teilen und Kollisionen eines Schneidkopfes mit Schnittgut kommen.

Hierin beschriebene Aspekte basieren zum Teil auf der Erkenntnis, dass neben der Minimierung der Rohstoffkosten mit dem Schneidprozess verbundene Kosten ebenfalls die Güte einer Verschachtelung betreffen. Mit dem Schneidprozess verbundene Kosten ergeben sich aus der eher geringen Prozesssicherheit von Flachbett-Laserschneidanlagen und umfassen beispielsweise die Beschädigung von Auflagestegen oder den Ausfall der Maschine durch Kollisionen eines Schneidkopfes mit verkippten Werkstücken.

Die Erfinder haben erkannt, dass sich zumindest einige dieser mit dem Schneidprozess verbundenen Einschränkungen auf die Relativposition des Rohblechs (und damit die auf dem Rohblech verteilten Schneidlinien) in Bezug auf die Auflagepunkte der Auflagestege beziehen.

Die hierein beschriebenen Konzepte können es erlauben, auf vorgegebene Auflagestegkonfigurationen zu reagieren und trotzdem kompakte Schachtelungen zur erzeugen. Dabei wird es angestrebt, große Restgitterbreiten zu vermeiden.

Die hierin vorgeschlagenen Konzepte gehen unter anderem davon aus, dass die Positionen der zu berücksichtigenden Stützpunkte (Auflagebereiche der Materialtafel, insbesondere Lagerungsoberflächenbereiche der Unterseite der Materialtafel) bei der Erzeugung eines Schachtelungsplans bekannt sind oder zumindest derart für einen Schneidprozess einstellbar sind, dass sie vorbestimmten und der Planung zugrunde liegenden Positionen angepasst werden können.

Es ist bekannt, dass Schachtelungsverfahren, die eine Schachtelung von Bauteilen auf einer Palette vorschlagen, auf evolutionären Algorithmen basieren können. Auch die hierin vorgeschlagenen prozessorientierten Schachtelungsverfahren können als evolutionäre Algorithmen ausgeführt werden. Dabei fließt in die Bewertung (Fitnessfunktion des evolutionären Algorithmus) eines Lösungsvorschlags (hierin auch kurz Lösung) nicht nur der Materialanteil ein, sondern es werden auch weitere für die Schnittkosten relevante Eigenschaften eines Schachtelungsplans bewertet. So können z. B. die Lage der Teile relativ zu Auflagestegen einer Palette und die Lage von Einstichpunkten in die Bewertung eingehen.

Die hierin vorgeschlagenen Verfahren können derart in den Schneidprozess eingebunden werden, dass benötigte Fertigungsprozessdaten eingelesen werden, wenn eine Materialtafel auf einer Palette abgelegt wird. Die relativen Positionen der Auflagebereiche relativ zur Materialtafel können beispielsweise während des Betriebs bestimmt werden. Dies kann z. B. mit einer Sensorik der Flachbettwerkzeugmaschine, insbesondere einer kapazitiven Abstandssensorik zur Abstandsdetektion zwischen der Düse der Flachbettwerkzeugmaschine und der Materialtafel erfolgen. Allgemein kann zumindest eine Untergruppe der Auflagestege und/oder der Stegspitzen erfasst werden und optional können die Positionen nichterfasster Auflagestege und/oder Stegspitzen durch Interpolation berechnet werden. Weitere Messverfahren basieren z. B. auf einer optischen Sensorik, die auf mindestens einem der folgenden Verfahren basiert: Bildverarbeitungsverfahren basierend auf einer Flächenbildaufnahme, einem Laserlichtschnitt-Verfahren, einem Streifenlichtprojektions-Verfahren, einer Lichtfeldkamera, einer TOF-Kamera, insbesondere zur Tiefenerfassung von Stegvertiefungen, der Zustandserfassung der geometrischen Form für eine begleitende Beurteilung von Verschleiß eines Auflagestegs und/oder einer Stegspitze, und/oder auf einer Ultraschallsensorik, welche Ultraschallsensoren insbesondere an einem Schneidkopf der Flachbettwerkzeugmaschine einsetzt.

Des Weiteren können die hierin vorgeschlagenen Verfahren auf festgelegten/vorbestimmten relativen Positionen der Auflagebereiche relativ zur Planungstafel basieren, wobei die Erstellung der Schachtelungspläne und insbesondere die die Positionsdaten einbeziehenden Bewertungen basierend auf den festgelegten/vorbestimmten relativen Positionen vorgenommen werden. Für den Fertigungsprozess ist es dann erforderlich, die festgelegten/vorbestimmten relativen Positionen der Auflagebereiche relativ zur auf die Materialtafel übertragenen Schachtelungsplänen sicherzustellen.

In den zuvor angesprochenen Ansätzen sind somit jeweils die relativen Positionen bekannt und stellen Eingangsparameter dar, die ihrerseits einstellbar sein können und entsprechend einen weiteren Freiheitsgrad in der prozessorientieren Schachtelung darstellen.

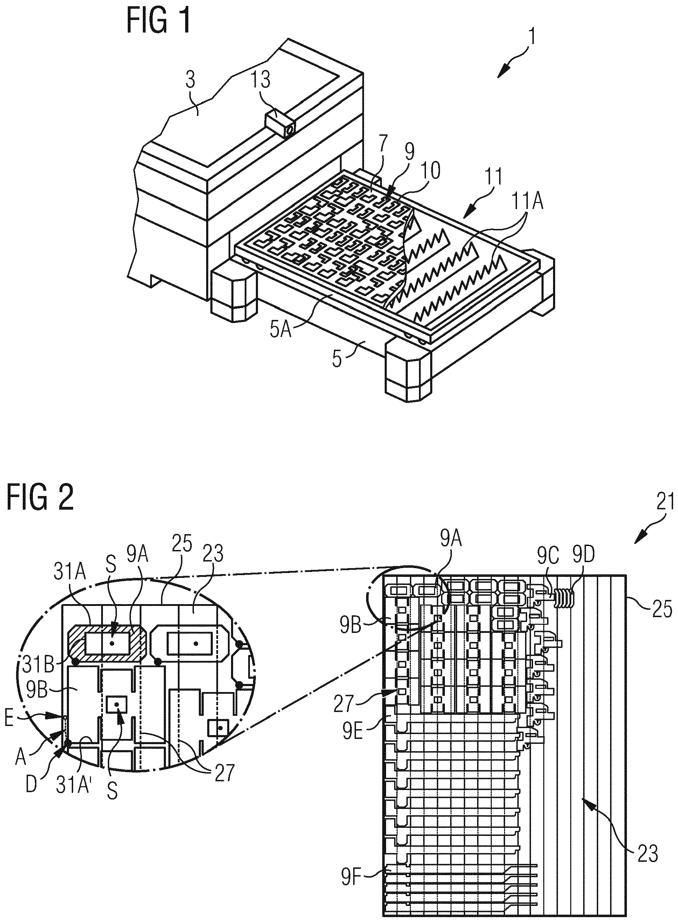

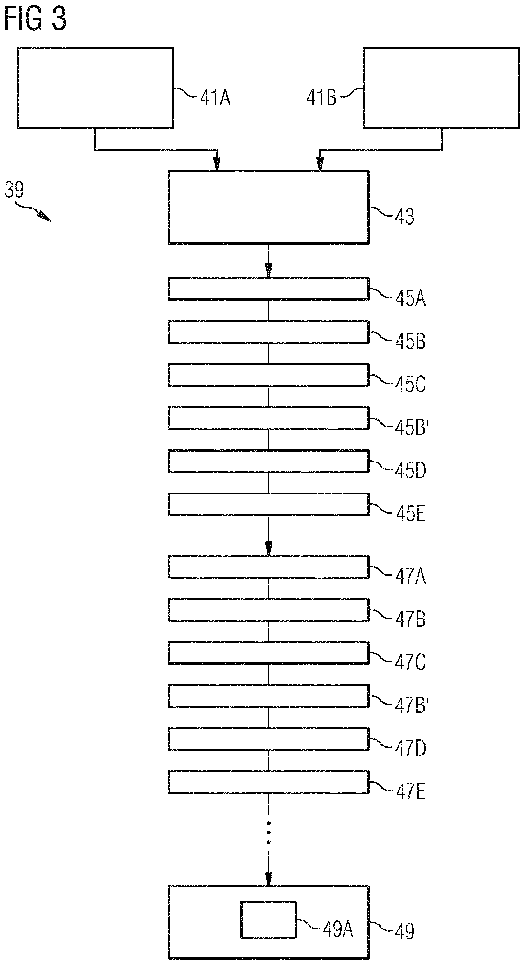

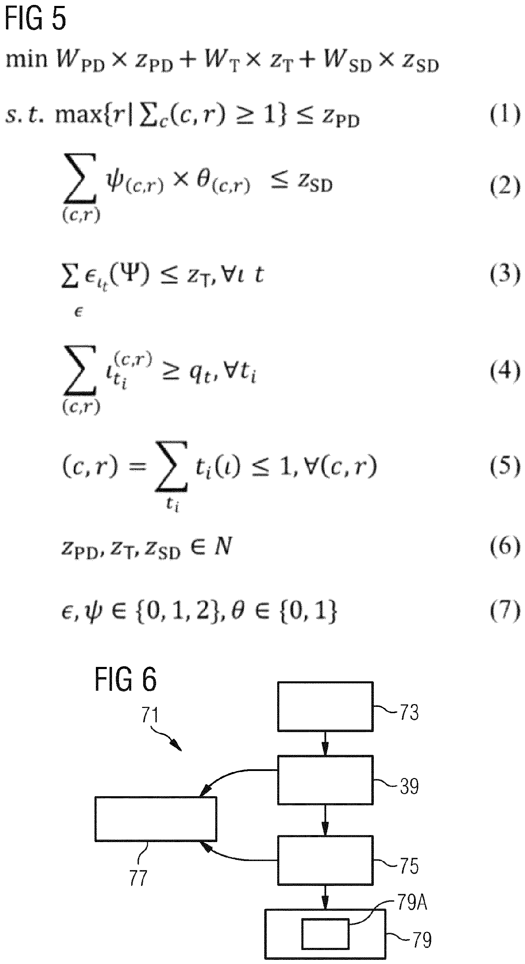

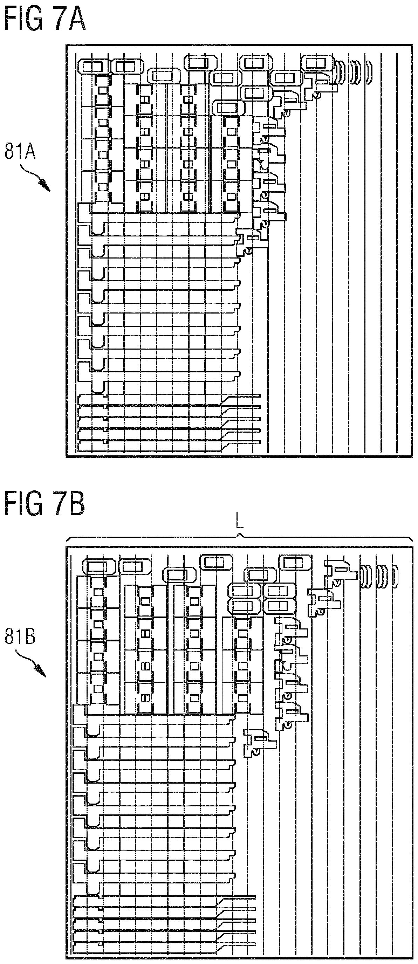

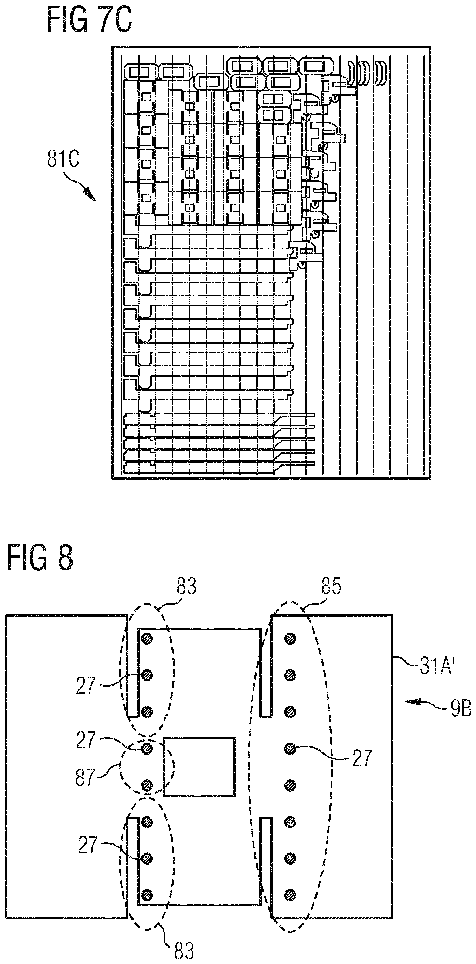

Im Folgenden wird zuerst die Erzeugung von Werkstücken mit einer Flachbett-Laserschneidemaschine erläutert und diese in Bezug zu Schachtelungsplänen gesetzt (Figuren 1 und 2). Verfahren zur Erzeugung eines Schachtelungsplans werden anschließend in Verbindung mit den Figuren 3 bis 5 und hinsichtlich der Erzeugung eines prozessorientierten Schachtelungsplans mit einem evolutionären Algorithmus in Verbindung mit den Figuren 6 und 7 erläutert. Abschließend wird in Verbindung mit den Figuren 8 bis 12 ein beispielhafter Bewertungsansatz eines Schachtelungsplans hinsichtlich des Einflusses von Auflagestegen auf den Schneidprozess einer Materialtafel, insbesondere von Auflageräumen im Planungsraum, dargestellt.

Eine in Fig. 1 gezeigte schematische Flachbettwerkzeugmaschine 1 umfasst ein Hauptgehäuse 3, in dem der Schneidprozess mit einem Laserstrahl durchgeführt wird. Insbesondere wird ein Fokus des Laserstrahls von einem Steuerungssystem entlang vorgegebener in einem Bearbeitungsbereich angeordneten Schneidlinien über ein Material geführt, um aus diesem Werkstücke mit spezifischen Formen aus z. B. einem sich im Wesentlichen zweidimensional erstreckenden Blech zu schneiden.

Ferner umfasst die Flachbettwerkzeugmaschine 1 einen Palettenwechsler 5. Der Palettenwechsler 5 ist dazu ausgebildet, eine oder mehrere Paletten während der Fertigung zu positionieren. Auf einer Palette 5A kann eine zu schneidende Materialtafel (als Roh- oder Ausgangsmaterial) gelagert und in das Hauptgehäuse 3 für den Schneidvorgang eingebracht werden. Nach dem vollendeten Schneidvorgang kann die Palette 5A, wie in Fig. 1 gezeigt, mit einer geschnittenen Materialtafel 7 aus dem Hauptgehäuse 3 gefahren werden, sodass die geschnittenen Werkstücke 9 absortiert werden können.

Im Hauptgehäuse 3 kann der Laserbearbeitungskopf, aus dem der Laserstrahl austritt, im Bearbeitungsbereich frei positioniert werden, so dass der Laserstrahl im Wesentlichen entlang beliebiger zweidimensionaler Schneidlinien über die zu schneidende Materialtafel geführt werden kann. Beim Laserschneiden erwärmt der Laserstrahl das Metall entlang der Schneidlinie, bis es schmilzt. Ein Gasstrahl, meist Stickstoff oder Sauerstoff, tritt üblicherweise im Bereich des Laserstrahls aus dem Laserbearbeitungskopf aus und drückt das geschmolzene Material nach unten und aus dem sich ausbildenden Spalt. Die Materialtafel 7 wird somit beim Schneiden vom Laserstrahl vollständig durchtrennt.

Zum Ausschneiden eines Werkstücks 9 wird der Laserstrahl entlang einer Schneidlinie 10 bewegt. Diese beginnt üblicherweise an einem Einstichpunkt, der außerhalb des Werkstücks 9 liegt, und nähert sich dann der Kontur des Werkstücks 9 in einem Bogen (dem sogenannten Anschnitt) an. Der Punkt, an dem die Schneidlinie zuerst die Kontur des Werkstücks berührt, ist der Punkt, an dem der Schnitt später abgeschlossen wird (ein kontinuierlicher Schneidvorgang vorausgesetzt). Dieser Punkt wird als Druckpunkt bezeichnet, da er der Punkt ist, an dem der austretende Gasstrahl einen Druck auf das geschnittene Teil ausübt und zwar zu dem Zeitpunkt, an dem es sich erstmals frei bewegen kann. Insbesondere bei dünnen Materialtafeln kann der Gasdruck zu einem Verkippen des Werkstücks führen, so dass potentiell ein Teil des Werkstücks aus der Ebene der Metalltafel herausragen und z. B. mit dem Schneidkopf kollidieren kann.

Im gezeigten Ausführungsbeispiel weist die Palette 5A mehrere quer zur Einschubrichtung verlaufende und parallel zueinander ausgerichtete Auflagestege 11 auf. Beispielhaft haben die Auflagestege 11 einen Abstand von z. B. 60 mm zueinander. Die Auflagestege 11 bilden Auflagebereiche 11A aus, auf denen die Materialtafel 7 abgelegt wird. Die Auflagebereiche 11A bilden üblicherweise Gitterpunkte, die entlang der Auflagestege 11 einen Abstand von z. B. 15 mm aufweisen können, wobei ein Auflagesteg z. B. eine Dicke von 2 mm aufweist. Die Auflagebereiche 11A bilden somit ein Raster von Bereichen, die den Schneidvorgang der auf ihnen liegenden Materialtafel 7 beeinflussen können. Die den Schneidvorgang beeinflussenden Bereiche der Auflgestege können sich überdies auf Bereiche erstrecken, die sich direkt an die im Kontakt mit der Materialtafel stehenden Auflagebereiche anschließen, z. B. die zu den Auflagebereichen 11A führenden Flanken der Auflagestege 11.

Fig. 1 zeigt ferner eine Kamera 13, die z. B. am Hauptgehäuse 3 angeordnet ist. Die Kamera 13 kann u. a. für eine Bilderfassung der Palette 5A, der Auflagestege 11 und Auflagebereiche 11A sowie der relativen Lage der Materialtafel 7 bezüglich der Palette 5A (und evtl. der Auflagestege 11 und Auflagebereiche 11A) ausgebildet sein und steht in Verbindung mit einer Bildauswerteeinheit des Steuerungssystem der Flachbettwerkzeugmaschine 1.

Man erkennt, dass aufgrund der Lagerung in lokalisierten Bereichen prozessbedingte Risiken die Prozesssicherheit beeinflussen können. Beispielsweise kann das Kippen eines Werkstücks 9 zu Schäden am Werkstück 9 und/oder an einem Schneidkopf führen und so das Risiko von Ausschuss und Ausfallzeiten erhöhen. Ferner führen Beschädigungen der Auflagestege 11 zu höheren Servicekosten für den Austausch oder zu längeren Stillstandzeiten. Im Fall von einem Abtrag des Auflagestegs 11 im Ablagebereich 11A kann sich ferner die Anzahl der Auflagepunkte reduzieren, was das Risiko eines Verkippens von Werkstücken 9 erhöhen kann. Verläuft die Schneidlinie 10 in der Nähe eines Auflagebereichs 11A besteht ein erhöhtes Risiko für eine Qualitätsminderung z. B. der Unterseite des Werkstücks. Auch kann der Schneidprozess zusammenbrechen, wenn geschmolzenes Material nicht ausreichend aus dem Spalt ausgeblasen werden kann und somit ein Werkstück nicht vollständig abgetrennt wird, was jeweils zu mehr Ausschussteilen führen kann.

Eine Aufgabe der hierin beschriebenen Schachtelungsverfahren ist es somit auch, eine prozessorientierte Anordnung der Werkstücke 9 in der Materialtafel 7 vorzuschlagen, die die zuvor aufgeführten Risiken und mögliche Zusatzkosten aufgrund von z. B. Ausschussteilen sowie Service und Ausfall der Flachbettwerkzeugmaschine reduziert.

Eine wesentliche Randbedingung bei der Verschachtelung von Werkstücken 9 ist beim Schneiden von Blechen ein Mindestabstand zwischen Schneidlinien 10. Dieser ist bedingt durch thermische Effekte beim Erwärmen entlang der Schneidlinie 10, falls diese z. B. zu nah an einem bereits erwärmten Bereich liegt, und/oder durch das Erfordernis eines Sicherheitsabstands, falls sich ein Werkstück verkippen sollte. Der Mindestabstand geht allerdings auch direkt in die Menge des Verlustmaterials und damit in die Materialkosten ein.

Der Mindestabstand ist somit ein Parameter, der spezifisch für ein zu schneidendes Material (Art des Materials und Geometrie, insbesondere Dicke, des Materials) und für einen Schneidvorgang (zur Berücksichtigung eines z. B. prozessbedingten Ausdehnens oder Verziehens des Materials) vorgegeben ist. Übertragen auf die Erstellung eines Schachtelungsplans darf der Abstand zwischen Konturen von benachbarten Teilräumen den Mindestabstand nicht unterschreiten, da sonst bei der Anwendung des Schachtelungsplans auf eine Materialtafel eine vorausgesetzte Qualität des Schneidvorgangs nicht mehr gewährleistet werden kann. Bei den hierin vorgeschlagenen Konzepten liegt der Mindestabstand dem Schachtelungsverfahren als Schachtelungseingangsparameter zugrunde und wird entsprechend auch im Schneidvorgang umgesetzt. Somit ist es eine weitere Aufgabe der hierin vorgeschlagenen Konzepte, den Abstand zwischen Schneidlinien in Abwägung mit prozessbedingten Kosten gering zu halten, d. h., dass auch Abstände im Mindestabstand möglich sind.

Weitere Randbedingungen können die Dauer des Schneidprozesses und/oder Verlustwege bei der Bewegung des Bearbeitungskopfes betreffen.

Ferner können beispielsweise zusätzlich butzenspezifische Aspekte unter Einbeziehen der Positionen der Auflagebereiche bewertet werden, wie eine Verkippungswahrscheinlichkeit eines aus einem Werkstück ausgeschnittenen Innenbereichs (Butze) oder die Wahrscheinlichkeit, dass eine Butze aus dem Werkstück fällt. Ersteres kann bei der Schachtelung mit Hilfe der angesprochenen, die Verkippung bewertenden Bewertungsverfahren erfolgen, letzteres beispielsweise durch den Abgleich von Auflageräumen mit den Butzenräumen.

Fig. 2 zeigt einen Schachtelungsplan 21, wie er mit einer als Bottom (Hauptrichtung)-Left (Nebenrichtung)-Anordnungsvorschrift bekannten Anordnungsvorschrift in einem zweidimensionalen Planungsraum 23 mithilfe eines evolutionären Algorithmus erzeugt werden kann. Wie der Fachmann erkennen kann, verläuft in Fig. 2 die Hauptrichtung von rechts nach links und die Nebenrichtung von oben nach unten. Der Planungsraum 23 wird im Bereich einer Planungstafel 25 aufgespannt. Die Planungstafel 25 wird für den Schneidvorgang auf die Materialtafel derart übertragen, dass entsprechende Geometriedaten des Planungsraums 23 dem von der Schneidmaschine 1 für eine Werkstücktafel 7 bereitgestellten Bearbeitungsbereich entsprechen (und die Lagerung mit den angenommenen Positionsdaten der Auflageräume übereinstimmt). Im vorliegenden Beispiel ist ein rechteckiger Planungsraum 23 angenommen worden, der auf eine entsprechend rechteckig geformte Materialtafel angewandt werden soll.

Der Schachtelungsplan wird in einer dem Schneidvorgang vorausgehenden Planungsphase erstellt, beispielsweise mit der Steuerungseinheit der Flachbettwerkzeugmaschine, wenn in die Planung z. B. aktuell erfasste Positionsdaten einfließen, oder in einer eigenständigen Planungseinheit mit entsprechender Rechenkapazität, falls z. B. von vorbestimmten Positionsdaten ausgegangen wird und diese dann nachträglich für den Schneidvorgang aufgrund einer entsprechenden Positionierung der Materialtafel auf der Palette und den Auflagestegen umgesetzt werden.

Der Schachtelungsplan 21 zeigt eine überlappungsfreie Anordnung von Teilräumen 9A-9F im zweidimensionalen Planungsraum 23, wobei die (ebenfalls zweidimensionalen) Teilräume 9A-9F sechs verschiedenen Typen von Werkstücken entsprechen.

Der Schachtelungsplan 21 betrifft die Erzeugung von 50 Testwerkstücken. D. h., es wurden die verschiedenen Teilräume 9A-9F mehrfach geschachtelt. Mit anderen Worten liegen dem Schachtelungsplan 21 Anzahldaten zugrunde, die Stückzahlen der im Planungsraum 23 zu schachtelnden Teilräume 9A-9F angeben.

Der dargestellten Anordnung liegt eine Einfügereihenfolge für die insgesamt 50 Teilräume zugrunde. Eine Einfügereihenfolge bestimmt allgemein die Reihenfolge, mit der die Teilräume bei einer sequenziellen Erzeugung des Schachtelungsplans 21 nacheinander in den Planungsraum 23 eingefügt und hier beispielhaft gemäß einer Bottom-Left-Strategie im Planungsraum 23 angeordnet werden.

Im Schachtelungsplan 21 ist ferner schematisch eine räumliche Anordnung von vorbestimmten Auflageräumen 27 festgehalten. Zur Verdeutlichung des Ursprungs der Auflageräume sind diese teilweise, ähnlich den Auflagestegen, in Linien zusammengefasst und nur im Bereich der Teilräume 9A-9F lokalisiert als Punkte dargestellt. Wie bereits angesprochen liegen für die nachfolgend beschriebenen Schachtelungsverfahren Positionsdaten vor, die die Positionen der Auflageräume 27 im Planungsraum 23 angeben. Die Positionsdaten werden bei der Bewertung von Lagen der Teilräume verwendet.

Zur Verdeutlichung werden weitere Schneidprozessdaten und -parameter in einem vergrößerten Ausschnitt einer Ecke des Planungsraums 23 gezeigt. Jeder der Teilräume ist durch eine oder mehrere geschlossene Konturen begrenzt. Beispielhaft sind für den Teilraum 9A (gestrichelt hervorgehoben) eine Außenkontur 31A und eine Innenkontur 31B eingezeichnet. Für eine Außenkontur 31A' des Teilraums 9B sind zusätzlich ein Einstichpunkt E, ein Anfahrweg A und ein Druckpunkt D eingezeichnet.

Da gleiche Teilräume mehrfach entnommen und an unterschiedlichen Lagen im Planungsraum 23 zum Liegen kommen, kann das Kippverhalten eines Typs eines Teilraums in verschiedenen Lagen in Bezug auf die Auflageräume 27 untersucht werden.

Die beispielhaften Teilräume haben ferner unterschiedliche Größen, sind aber alle klein genug, damit der Gasdruck die Stabilität eines Teilraumes beeinflussen kann. Im vergrößerten Bereich der Fig. 2 erkennt man einzelne Auflageräume 27 innerhalb des Teilraums 9B, die zusammen mit dem jeweiligen Druckpunkt D und dem jeweiligen Schwerpunkt S eines Teilraums eine Kippanfälligkeit eines durch den Teilraum 9B bestimmten Werkstücks definieren. Für die drei in der vergrößerten Darstellung gezeigten Teilräume wurde eine Kippanfälligkeit für einen vorgegebenen Gasdruck festgestellt. Dies rührt daher, dass die Druckpunkte an Abschnitten der Konturen angeordnet sind, die weit entfernt von möglichen Kippachsen, die z. B. durch die Aufreihung der Auflagebereiche 27 ausgebildet werden. Entsprechend liegen für ein Verkippen günstige Hebelbedingungen vor.

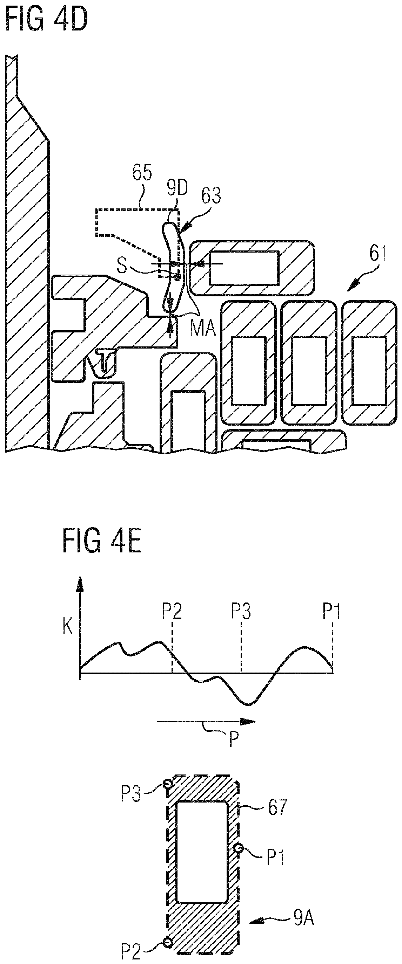

Dem in Fig. 2 abgebildeten Schachtelungsplan 21 liegt ferner ein Werkstückmindestabstand zugrunde, der u. a. durch die Materialdicke der mit dem Schachtelungsplan zu unterteilenden Materialtafel und den vorzunehmenden Schneidparametern festgelegt wird. Der Werkstückmindestabstand hat mindestens zwischen zwei benachbarten, im Planungsraum 23 angeordneten Teilräumen 9A-9F vorzuliegen. Er liegt z. B. in einem Bereich von beispielsweise 5 mm bis 20 mm, insbesondere 10 mm. Der Werkstückmindestabstand ist in der schematischen Ansicht der Fig. 2 nicht auflösbar (für einen Werkstückmindestabstand MA siehe auch Fig. 4D). Der Werkstückmindestabstand stellt sicher, dass sich eine Schneidlinie nicht negativ auf eine benachbarte Schneidlinie hinsichtlich des Schneidvorgangs (z. B. einer Schneidqualität) auswirkt.

Für die nachfolgend beschriebenen Schachtelungsverfahren können allgemein Anordnungsvorschriften eingesetzt werden, die definieren, wie Teilräume im Planungsraum nacheinander räumlich angeordnet werden. Dies ist nicht auf eine Bottom-Left-Strategie beschränkt, wie sie den in den Figuren gezeigten beispielhaften Schachtelungsplänen zugrunde liegt. Vielmehr können z. B. auch Bottom-Left-Fill-Strategien oder No-Fit-Polygon-Ansätze (siehe auch Beschreibung zur Fig. 4D) verfolgt werden.

Mit Bezug auf das in Fig. 3 gezeigte Flussdiagramm eines Verfahrens 39 zur Erzeugung eines Schachtelungsplans gehen die hierin vorgeschlagenen Schachtelungsverfahren allgemein davon aus, dass Schneidprozessdaten (wie Geometriedaten des Planungsraums, Positionsdaten für die Positionen der Auflageräume, mehrere anzuordnende Teilräume und deren Anzahldaten) zusammen mit Schachtelungseingangsparametern (wie Werkstückmindestabstand, Einfügereihenfolge und Anordnungsvorschrift) bereitgestellt werden (Schritte 41A, 41B).

Ein Schachtelungsverfahren ordnet in einem ersten Schritt 43 gemäß der Einfügereihenfolge und der Anordnungsvorschrift einen ersten Teilraum im Planungsraum (Initiallage des ersten in der Einfügereihenfolge aufgeführten Teilraums) an. Eine Lage bezieht sich hierin üblicherweise auf einen Referenzpunkt eines der Teilräume, z. B. auf einen Flächenschwerpunkt, der (eine gleichmäßige Dicke der Materialtafel vorausgesetzt) dem Massenschwerpunkt eines ausgeschnittenen Werkstücks entspricht. (Es wird angemerkt, dass die nachfolgend beschriebenen Bewertungen vorwegnehmend schon dieser erste Anordnungsschritt, d. h., die Initiallage, bewertet und entsprechend durch Variieren der Lage des Teilraums oder weiterer Parameter verbessert werden kann.)

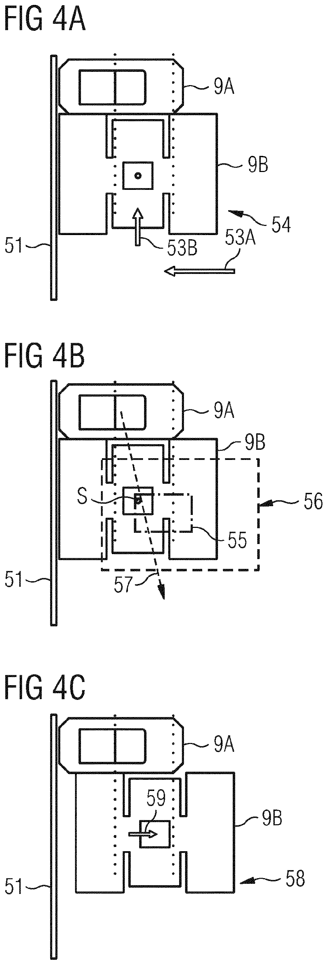

In einer Abfolge von weiteren Schritten 45A, 47A ... werden nun weitere Teilräume gemäß der Einfügereihenfolge und der Anordnungsvorschrift im Planungsraum eingefügt. Dabei ordnet die Anordnungsvorschrift einem neu eingefügten Teilraum im Planungsraum jeweils eine Ausgangslage (siehe auch Ausgangslage 54 in Fig. 4A) zu, in der mindestens ein Punkt des Teilraums im Werkstückmindestabstand von einem anderen bereits eingefügten Teilraum angeordnet ist.

Nach jedem neuen Einfügen eines Teilraums wird eine Packungsdichtenbewertung und mindestens eine die Positionsdaten einbeziehende Bewertung der jeweiligen Ausgangslage des neu eingefügten Teilraums durchgeführt (Schritt 45B, 47B, ...).

In Abhängigkeit eines Bewertungsergebnisses der Ausgangslage eines neu eingefügten Teilraums wird ein lokaler Suchraum aufgespannt (Schritt 45C, 47C, ...), der für den neu eingefügten Teilraum mindestens eine Alternativlage umfasst (siehe auch Suchraum 55 und beispielhafte gestrichelt eingezeichnete Alternativlage 56 in Fig. 4B). Die Alternativlagen im Suchraum werden wieder mit der Packungsdichtenbewertung und der mindestens einen die Positionsdaten einbeziehende Bewertung bewertet (Schritt 45B', 47B', ...).

Eindimensionale Suchräume können sich im Planungsraum erstrecken und beispielsweise entlang einer geraden oder gekrümmten Linie angeordnete Alternativlagen umfassen. Zweidimensionale Suchräume können sich ebenfalls im Planungsraum erstrecken und z. B. vom Schwerpunkt der Ausgangslage ausgehen. Ein zweidimensionaler Suchraum enthält z. B. alle Punkte, auf denen der Referenzpunkt eines Teilraums, z.B. der Schwerpunkt, platziert werden kann. Eine weitere Dimension für einen Suchraum kann ferner Rotationszustände eines Teilraums umfassen. Auch diese können einem Referenzpunkt zugeordnet sind. Ein weiterer eindimensionaler Suchraum kann ferner Positionen des Druckpunkts auf einer Kontur eines Teilraums umfassen. Auch diese können z. B. einer Schwerpunktlage als Referenzpuntkt zugeordnet. Mehrdimensionale Suchräume können durch Kombination obiger Suchräume gebildet werden.

Nun werden die Bewertungsergebnisse der Ausgangslage und der mindestens einen Alternativlage verglichen (Schritt 45D, 47D, ...). Basierend auf dem Ergebnis wird spezifisch für die Einfügereihenfolge eine der bewerteten Lagen als Schneidlage (siehe auch Schneidlage 58 in Fig. 4C) für den neu eingefügten Teilraum im Schachtelungsplan festgelegt (Schritt 45E, 47E, ...). Für einen Teilraum ist die Anordnung mit der Festlegung der Schneidlage abgeschlossen und der nächste Teilraum gemäß der Einfügereihenfolge wird festgelegt und eingefügt.

Sind auf diese Weise alle Teilräume gemäß der Einfügereihenfolge hinzugefügt, bewertet und in der Lage bezüglich den Positionsdaten optimiert worden, ist ein Schachtelungsplan 49A erzeugt worden, der die an den Schneidlagen angeordneten Teilräume umfasst. Für den Schachtelungsplan 49A kann eine Gesamtbewertung aus den Bewertungen der einzelnen Teilräume gebildet werden. Der Schachtelungsplan 49A kann (beispielsweise zusammen mit seiner Gesamtbewertung) ausgegeben oder in einem Speicher der Steuerungseinheit oder der Planungseinheit abgelegt werden (Schritt 49).

Bezugnehmend auf die Alternativlagen im Suchraum können Alternativlagen allgemein durch Anwenden einer Translations- und/oder Rotationsoperation auf die Ausgangslage oder eine andere Alternativlage erzeugt werden. Der Suchraum kann u. a. auch auf diese Weise aufgebaut werden, wobei gegebenfalls weitere Randbedingungen erfüllt sein müssen wie keine Überlappung, nicht zu weite Verschiebung etc. Das Ausmaß von Translation und Rotation hängt dabei insbesondere vom Bewertungsverfahren ab. Wird beispielsweise eine möglichst hohe Packungsdichte angestrebt, werden die Translationen räumlich beschränkt sein. Eine derartige Begrenzung des Suchraums kann beispielsweise durch den Einbezug der nachfolgend erläuterten Gewichtungen W_{PD} beim Aufspannen des Suchraums erfolgen. Allgemein wird der lokale Suchraum eine so große Anzahl von Alternativlagen aufweisen, wie sie rechenzeitmäßig vertretbar ist, wobei möglichst unterschiedliche geometrische Bedingungen auf den Auflageräumen bewertet werden sollen.

Die Alternativlagen können beispielsweise durch schrittweises Verschieben um vorgegebene Inkremente in ein oder zwei Richtungen erzeugt werden, wobei jeweils überprüft wird, ob die Teilräume überlappungsfrei sind und noch im Planungsraum liegen. Die Verschiebung kann von einer Rotation des Teilraums begleitet werden oder es kann nur eine Rotation vorgenommen werden, wenn z. B. die Randbedingung der überlappungsfreien Anordnung mit einer reinen Verschiebung nicht erfüllt werden kann. Ferner kann die Verschiebung bevorzugt entgegen einer letzten der Anordnungsvorschriften zugrunde liegenden Richtung erfolgen. Alternativ kann sie entlang einer Richtung, in der der Mindestabstand zu einem benachbarten Teilraum (oder einer Randkontur des Planungsraums, die in diesem Fall z.B. einer Kontur eines Teilraums vergleichbar ist, evtl. mit einem anderen Mindestabstand) vorliegt. Die Verschiebung kann ferner entlang einer Verbindungslinie von Schwerpunkten benachbarter Teilräume erfolgen.

Beispielsweise kann der in der Alternativlage angeordnete, neu eingefügte Teilraum in mindestens einer Richtung einen größeren Abstand von einem bereits eingefügten Teilraum (oder einer Randkontur des Planungsraums) aufweisen als der neu eingefügte Teilraum in der Ausgangslage. Allgemein kann der in der Alternativlage angeordnete neu eingefügte Teilraum in mindestens einer Richtung aus seiner Ausgangslage verschoben worden sein, wobei vorausgesetzt ist, dass die Alternativlage ebenfalls überlappungsfrei hinsichtlich bereits eingefügter Teilräume ist.

Ferner kann der Anordnungsvorschrift eine Annäherungsrichtung zugeordnet sein und in der Alternativlage kann der neu eingefügte Teilraum in einer Richtung entgegen dieser Annäherungsrichtung von der Ausgangslage verschoben worden sein.

Fig. 4A verdeutlicht die Anordnung zweier Teilräume: einen bereits eingefügten Teilraum 9A und einen neu einzufügenden Teilraum 9B. Gemäß einer beispielhaften Bottom-Left-Anordnungsvorschrift wurde der Teilraum 9B zuerst in Richtung einer Randkontur 51 des Planungsraums verschoben (Pfeil 53A), und zwar solange bis der Teilraum 9B gerade noch im Planungsraum liegt. Dann wurde der Teilraum 9B entlang der Randkontur 51 in Richtung eines bereits positionierten Teilraums bewegt (Pfeil 53B). Liegt der Mindestabstand zu dem bereits positionierten Teilraum vor, ist eine Ausgangslage 54 erreicht.

Es wird angenommen, dass die Bewertung der Ausgangslage 54 eine Kippwahrscheinlichkeit für den Teilraum 9B ergab. Entsprechend ist ein lokaler Suchraum 55, der Alternativlagen für vergleichende Bewertungen der Kippwahrscheinlichkeit umfasst, aufzuspannen. Der Suchraum 55 ist in Fig. 4B schematisch als strich-punktiertes Rechteck angedeutet. In Fig. 4B wurde der Suchraum 55 bezüglich des Schwerpunkts S des Teilraums 9B als Referenzpunkt gezeigt; d. h., eine Ecke des Rechtecks wird von der Lage des Schwerpunkts des Teilraums in der Ausgangslage 54 gebildet. Als gestricheltes Rechteck ist eine beispielhafte Alternativlage 56 gezeigt, deren Schwerpunkt ebenfalls im Suchraum 55 liegt. Der Suchraum 55 erstreckt sich entgegen einer der Richtungen aus der Anordnungsvorschrift (hier entgegen dem Pfeil 53A) über einen Länge, die beispielsweise etwa dem Abstand zwischen zwei Aufreihungen von Auflageräumen entspricht. Das Ausmaß des Suchraums 55 ist etwas kleiner entgegen der anderen der Richtungen aus der Anordnungsvorschrift (hier entgegen dem Pfeil 53B).

In dem Suchbereich 55 liegen mehrere Alternativlagen, die bewertet werden. Die hinsichtlich Kippstabilität und Packungsdichte günstigste Alternativlage ist als Schneidlage 58 in Fig. 4C gezeigt. Die Schneidlage 58 entspricht einer Parallelverschiebung der Ausgangslage 54 des Teilraums 9B entlang einem Pfeil 59 im Mindestabstand zum Teilraum 9A, aber bei zunehmenden Abstand zur Randkontur 51. Um möglichst wenig Verlustmaterial zu generieren, wurde die Translation nur soweit vorgenommen, bis ein vorbestimmter Grenzwert hinsichtlich der Kippstabilität erreicht wird.

In Fig. 4B wird eine weitere beispielhafte Translationsrichtung (gestrichelter Pfeil 57) zwischen Ausgangslage und Alternativlage angedeutet. Eine Translation entlang des Pfeils 57 erhöht den Abstand zwischen den Schwerpunkten der Teilräume 9A, 9B , wodurch der Mindestabstand für die beiden Teilräumen nicht mehr gegeben ist.

Fig. 4D verdeutlicht das Aufspannen eines lokalen Suchraums bei der Verwendung eines No-Fit-Polygon-Ansatzes. Man erkennt ein Cluster 61 von mehreren bereits angeordneten Teilräumen. Mit Hilfe des No-Fit-Polygon-Ansatzes wurde eine Ausgangslage 63 für einen neu hinzugefügten Teilraum 9D gefunden. Der Teilraum 9D ragt zum Teil in eine Aussparung im Cluster 61 hin und weist einen Mindestabstand MA zu zwei benachbarten bereits positionierten Teilräumen auf. Unter Einhalten von Randbedingungen wurde ein Suchraum 65 aufgespannt, der zumindest bei unveränderter Orientierung des Teilraums 9D nicht zu einem Überlapp mit den Teilräumen des Clusters 61 führt und sich in diesem Sinne "weg" vom Cluster 61 erstreckt. Beispielhaft bezieht sich der Suchraum 65 wieder auf den Schwerpunkt S als Referenzpunkt des Teilraums 9D. Für alle oder einige der Alternativlagen im Suchraum 65 können wieder Packungsdichtenbewertungen und die Positionsdaten einbeziehende Bewertungen durchgeführt werden, um eine Schneidlage festzulegen.

Fig. 4E verdeutlicht das Aufspannen eines (eindimensionalen) lokalen Suchraums für eine Bewertung, die die Positionsdaten der Auflageräume für eine mechanische Kippanalyse einbezieht. Der Suchraum bezieht sich dabei auf eine Variation der Position des Druckpunkts auf einer Kontur 67 eines Teilraums 9A.

Beispielhaft ist in Fig. 4E in einem Diagramm ein Verlauf einer Kippwahrscheinlichkeit K über Positionen P des Druckpunkts auf der Kontur 67 des Teilraums 9A aufgetragen, und zwar unter Annahme einer festen Lage des Teilraums 9A bzgl. der Auflageräume. Im Diagramm erkennt man einen ausgedehnten stabilen Bereich (geringe Kippwahrscheinlichkeit), z. B. bei der Position P2, und einen instabilen Bereiche (erhöhte Kippwahrscheinlichkeit) um die Position P3. Die Position 1 kann weder die Eigenschaft "stabil" noch die Eigenschaft "instabil" zugeordnet werden.

Die Positionen P1, P2, P3 sind beispielhaft für eine schematische Darstellung des Teilraums 9A auf der Kontur 67 angegeben. Der Suchraum ist somit eindimensional und weist maximal die Größe des Umfangs des Teilraums 9A auf.

Beispielhaft wird nachfolgend die additive Kombination von drei Bewertungsverfahrenen erläutert. Dabei können die drei Bewertungsverfahren je nach Anforderungen an den Schneidprozess unterschiedlich gewichtet werden. Beispielhaft kann eine additive Gewichtung der folgenden drei Bewertungsansätze vorgenommen werden:
- Eine Bewertung der Menge an Verlustmaterial: Verlustmaterial ist dabei das Material der Materialtafel, das bei der Umsetzung keinem Teilraum des Planungsraums zugeordnet ist.
- Eine Bewertung des Verkippungsrisikos von geschnittenen Teilen anhand einer Hebelkraftanalyse: Man betrachtet die mechanische Auswirkung des Gasdrucks, der am Gasdruckpunkt wirkt. Unter gewissen geometrischen Bedingungen kann nach der Übertragung des Schachtelungsplans auf eine Materialtafel die Auswirkung des Gasdrucks eine (Kipp-) Bewegung des Werkstücks bewirken. Der Gasdruckpunkt entspricht dem Punkt auf der Schneidlinie, der zuletzt durchtrennt wird, denn hier wirkt der Gasdruck erstmalig auf das freigeschnittene Werkstück. Der Gasdruckpunkt hängt üblicherweise vom Anfahren der Schneidkontur ab. Für die Bewertung kann die Lage des Gasdruckpunkts bzgl. der Auflagepunkte als Lage eines Druckpunkts im Planungsraum bezüglich der Auflageräume ausgewertet werden, um das Kippverhalten eines Teilraums bzgl. der Auflageräume zu bestimmen. Dies entspricht in der Umsetzung die Stabilität der Lagerung eines Werkstücks auf den Auflagebereichen,. Bei der Schachtelung kann man beispielsweise drei Bewertungsklassen für Teilräume einführen: stabil, keine Aussage zur Kippwahrscheinlichkeit möglich, kippgefährdet (instabil). Zusammengefasst ist das Drehmoment der bei der Bewertung des Verkippungsrisikos zu berücksichtigenden Parameter, wobei sich das Drehmoment aus der Beschleunigung aufgrund der Gasdruckkraft, dem Abstand des Angriffspunkts der Gasdruckkraft von einem möglichen Drehpunkt und der Gewichtsverteilung ergibt.
- Eine Bewertung der Beschädigungsrate und/oder der Teilqualität: Bei der Durchführung eines Schneidvorgangs im Bereich eines Auflagestegs, insbesondere auf einem Auflagebereich, ist die Wechselwirkung des Laserstrahls nicht auf die Materialtafel beschränkt, so dass sich Abweichungen vom gewünschten Schneidprozess und eine Laserbearbeitung der die Materialtafel lagernden Strukturen ergeben können.

Hinsichtlich einer beispielhaften additiven Bewertungsfunktion "min ..." zeigt Fig. 5 ein mathematisches Modell, das der hierin vorgeschlagenen prozessorientierten Verschachtelung zugrunde gelegt werden kann. Gemäß dem Modell werden Bewertungen (Zielfunktionsvariablen z_{PG}, z_{T} und z_{SD}) jeweils für die Packungsdichte, die Verkippung (tilt) und die Auflagebeschädigung/Teilequalität durchgeführt, wobei Gewichtungen W_{PG}, W_{T} und W_{SD} vorgesehen sind. Das Modell unterliegt mehreren Nebenbedingungen, die in Fig. 5 mathematisch zusammengefasst sind: Die Nebenbedingung (1) bestimmt die Länge des Planungsraums (bei einer vorgegebenen Breite), die Nebenbedingung (2) die Variable "Schäden" und die Nebenbedingung (3) die Variable "Stabilität" für alle Teilräume. Die Nebenbedingung (4) stellt sicher, dass alle Teilräume platziert werden, die Nebenbedingung (5) verhindert das Überlappen von Teilen und die Nebenbedingungen (6) und (7) legen die Werte für die Variablen fest.

Im Modell wird der Planungsraum mit einer bestimmten Anzahl von Punkten gerastert. Die Punkte sind in Spalten c und Reihen r angeordnet, so dass jeder Punkt durch seine Zeilen- und Spaltennummer (c, r) identifiziert werden kann. Im Modell werden zunächst alle Punkte auf "0" gesetzt. Die Arten von Teilräumen t sind Matrizen, die die Größe des Begrenzungsrahmens eines zu schneidenden Werkstücktyps aufweisen und mit Binärwerten die Form des Werkstücktyps darstellen. Unterschiedliche, aber vordefinierte Rotationen eines Teilraums können in das Modell implementiert werden, indem der Satz aller Arten von Teilräumen t eine Matrix bildet, bei der jede Zeile eine Art eines Teilraums ist und jede Spalte einen anderen Rotationszustand umfasst. Daher ist die Anzahl der Spalten i gleich der Anzahl der zulässigen Rotationszustände. Die Teilräume können in diesem Fall als ti ∈ Ti geschrieben werden, um die Rotationszustände anzugeben. Die Anzahl der Teilräume, die auf dem Blech platziert werden müssen, ist für jede Art von Teilräumen durch qt gegeben.

Um zu überprüfen, ob ein Teil vollständig im Planungsraum liegt, kann z. B. ein Innenpass-Polygon (IFP) verwendet werden. Dieses IFP ist der Satz all jener Punkte, auf denen der Referenzpunkt (z. B. Schwerpunkt) eines Teilraums platziert werden kann, so dass der Teilraum noch vollständig im Planungsraum platziert ist. Aufgrund der Position des Referenzpunktes j wird der einzufügende Teilraum ti zu allen (c, r) hinzugefügt. Die Platzierung aller Teilräume darf nicht zu einem (c, r) größer als 1 führen, da dies auf eine Überlappung hinweisen würde.

Die Auflageräume sind als Gitter Ψ so groß wie der Planungsraum mit ψ(c, r) = {0, 1, 2} modelliert. Die Werte ψ(c, r) geben an, ob an einem Punkt des Planungsraums eine Lagerung erfolgt (Wert 2), d. h., der Punkt liegt in einem Auflageraum (bei der Umsetzung im Schneidvorgang liegt das Blech auf); oder es findet keine Lagerung statt (Wert 0) (bei der Umsetzung im Schneidvorgang ist unter dem Blech Freiraum vorhanden) oder es findet keine Lagerung statt, aber trotzdem ist eine Struktur in naher oder größerer Entfernung (Wert 1) (bei der Umsetzung im Schneidvorgang befindet man sich über einem Auflagesteg, aber nicht im Auflagebereich; d. h., der Punkt ist kein Stützpunkt zur Lagerung des Blechs).

Ein Teilraums ist mit θ(c, r) = 1 für jeden Punkt auf der Kontur des Teilraums und ansonsten mit Null festgelegt. Abhängig vom Schwerpunkt S eines Teilraums und dem Druckpunkt D kann berechnet werden, ob der Teilraum (bzw. das geschnittene Werkstück) kippen wird. Dies wird mit der Variablen *ε* ausgedrückt, wobei "0" einen stabilen Teilraum, "1" einen Teilraum mit einer unbestimmten Kipptendenz und "2" einen Teilraum mit einer Kipptendenz kodiert.

Das prozessorientierte Minimierungsproblem berücksichtigt die Packungsdichte z_{PD}, die Stabilität des Teilraums z_{T} und das Ausmaß an Schäden der z_{SD}. Die verschiedenen Variablen werden mit den Gewichten W_{PD}, W_{T}, W_{SD} gewichtet und additiv kombiniert. Ein kleinerer Bewertungswert stellt dabei eine günstigere Lage eines Teilraums dar.

Mit Blick auf die Größe eines Suchraums ist anzumerken, dass je größer W_{T} und W_{SD} im Verhältnis zu W_{PD} sind, desto größer wird der lokale Suchraum sein, da ein großer lokaler Suchraum eher zu Lösungen mit geringer Packungsdichte führen kann. Dies ist jedoch nicht unbedingt der Fall, da Teile später im freien Raum platziert werden können.

Mit Bezug auf das in Fig. 6 gezeigte schematische Flussdiagramm eines Verfahrens 71 zur Schachtelung von beliebigen Teilräumen im zweidimensionalen Planungsraum kann das Verfahren insbesondere für eine Umsetzung in einen evolutionären Algorithmus in eine Einfügereihenfolge von Teilräumen und eine feststehende Anordnungsvorschrift zerlegt werden. Z. B. mit einem evolutionären Algorithmus kann die Einfügereihenfolge der einzufügenden Teilräume mit dem Optimierungsziel verändert werden, um eine Einfügereihenfolge mit einem möglichst guten Gesamtbewertungswert zu erreichen. Die Implementierung eines Schachtelungsalgorithmus als evolutionären Algorithmus ist beispielweise aus "Genetic Algorithms and Grouping Problems", E. Falkenauer, New York: Wiley, 1998 bekannt.

Die hierin vorgeschlagene Bewertung in einer Fitnessfunktion (Min-Funktion in Fig. 5) des evolutionären Algorithmus setzt dabei den Ansatz um, dass, um gute Verbesserungen zu erzielen, eine Anordnungsvorschrift verwendet werden kann, die einen Suchraum einsetzt und die Teile nicht zwangsläufig zur Ausbildung einer dichtesten Packung einfügt, sondern auch die Lage des Teilraums (Werkstücks) im Planungsraum (Blech, Materialtafel) und die Lage des Teilraums (Werkstücks) relativ zu den Auflagebereichen (Stützstellen der Auflagestege) berücksichtigt.

Dies Vorgehen kann auch als eine Art Gesamtkostenbetrachtung verstanden werden. Dabei wird nicht nur das benötigte Material, sondern es wird auch die erwartete Kollisionshäufigkeit, die erwartete Stegbeschädigung, etc. mit den entsprechenden Kostensätzen berücksichtigt.

Hinsichtlich des lokalen Suchraums und der lokalen Suche, wie sie in Zusammenhang mit den Figuren 3 und 4A bis 4D erläutert wurden, kann der einzufügende Teilraum so lange in eine nicht materialoptimierte Richtung verschoben werden, bis die Kosten des dadurch erzeugten Verlustmaterials den maximal möglichen Nutzen hinsichtlich möglicher Kostennachteile durch z. B. die Beschädigung von Auflagebereichen übersteigen. Mit anderen Worten wird im lokalen Suchraum getestet, wie groß mögliche Verbesserungen in Bereichen ohne Betrachtung der Materialausnutzung sind. Aus den untersuchten Lagen wird dann die am besten bewertete Lage als Schneidlage gewählt.

Wieder bezugnehmend auf das Flussdiagramm in Fig. 6 basiert die Erzeugung eines Schachtelungsplans im Verfahren 71 auf einer vorgegebenen Einfügereihenfolge. Diese kann als Gen eines evolutionären Algorithmus eingesetzt werden.

In einem ersten Schritt 73 des Schachtelungsverfahrens 71 werden die Gene initialisiert. Die initialen Einfügereihenfolgen (Gene) können z. B. stochastisch erzeugt werden oder auf Erfahrungswerten basieren.

Jedes der Gene dient der Erzeugung eines Schachtelungsplans (Schritt 39), wie beispielsweise in Zusammenhang mit Fig. 3 erläutert wurde. Eine Fitnessfunktion wird dabei wie oben beschrieben auf einer Packungsdichtenbewertung in Kombination mit mindestens einer die Positionsdaten der Auflageräume einbeziehenden Bewertung aufgebaut.

Als Nächstes wird für die gesamte Gen-Generation ein Vergleich der Gesamtbewertungen durchgeführt (Schritt 75). Basierend auf gut bewerteten Genen werden weitere Generationen durch Selektion, Mutation und Crossover erzeugt (Schritt 77), um als neue Einfügereihenfolgen weitere Schachtelungspläne im erneut durchgeführten Schritt 39 zu erzeugen, im erneut durchgeführten Schritt 75 Gesamtbewertungen zu erzeugen und diese zu vergleichen, um darauf aufbauend immer wieder neue Generationen von Genen zu erschließen. Die Selektion sorgt dabei allgemein dafür, dass gut bewertete Gene mehr Einfluss auf die nächste Generation haben. Die Bewertung und Erschließung weiterer Generation von Einfügereihenfolgen wird beispielsweise bis zu einem gewünschten Gesamtbewertungswert oder bis zu einer maximalen Anzahl von Generationen fortgesetzt.

Der Schachtelungsplan mit der dann vorliegenden besten Gesamtbewertung wird abschließend als schneidprozessorientierter Schachtelungsplan 79A ausgegeben (Schritt 79).

Die Fig. 7A-7C zeigen drei schneidprozessorientierte Schachtelungspläne für ein 2 mm dickes Baustahlblech mit einer Dichte von 7856 kg/m3. Die Schachtelungspläne sind für unterschiedliche Gewichtungen der Zielfunktionsvariablen z_{PG}, z_{T} und z_{SD} und damit Zielrichtungen der Optimierung generiert worden. Die Verbesserung wird dabei jeweils in einem Vergleich mit einer Gesamtbewertung des in Fig. 2 gezeigten Schachtelungsplans deutlich. Die in Fig. 2 gezeigte Anordnung weist als Ausgangsbewertung eine Gesamtbewertung mit 20 stabilen Teilräumen, 3 nicht getragenen Teilräumen, 21 kippgefährdeten Teilräumen und 6 nicht eindeutig zuzuordnenden Teilräumen auf.

Setzt man einen stationären Druckpunkt voraus, kann eine Stabilisierung gegen Verkippen nur durch Verschieben erreicht werden; d. h., es wird verschoben bis der Schwerpunkt des Teilraums ausreichend von Auflageräumen umgeben ist, um dem Gasdruck standzuhalten.

Für Schachtelungsverfahren mit einem festen (nicht optimierbaren) Anfahrpunkt sind in Fig. 7A und Fig. 7B schneidprozessorientierte Schachtelungspläne für ein "leichtes" und ein "starkes" prozessorientiertes Schachteln gezeigt.

Ein leichtes prozessorientiertes Schachteln unterliegt beispielhaft Gewichtungen wie Gewicht 1 für die Flächeneffizienz ("z_{PG}"), Gewicht 2 für die Kippanfälligkeit ("z_{T}") und wieder Gewicht 1 für die Beschädigung ("z_{SD}"). Die in Fig. 7A gezeigte Anordnung umfasst im Ergebnis 25 stabile Teilräume, 5 nicht getragene Teilräume, 17 kippgefährdete Teilräume und 3 nicht eindeutig zuzuordnende Teilräume im schneidprozessorientierten Schachtelungsplan 81A.

Ein starkes prozessorientiertes Schachteln unterliegt beispielhaft Gewichtungen wie Gewicht 1 für die Flächeneffizienz ("z_{PG}"), Gewicht 10 für die Kippanfälligkeit ("z_{T}") und wieder Gewicht 1 für die Beschädigung ("z_{SD}"). Die in Fig. 7B gezeigte Anordnung umfasst dabei 45 stabile Teilräume, 5 nicht getragene Teilräume und keine kippgefährdeten oder nicht eindeutig zuordbare Teilräume im schneidprozessorientierten Schachtelungsplan 81B.

Für ein Schachtelungsverfahren, bei dem zusätzlich ein variabler und damit optimierbarer Druckpunkt für die Teilräume umgesetzt wird, ist in Fig. 7C ein schneidprozessorientierter Schachtelungsplan 81C gezeigt.

Ist der Druckpunkt für einen Teilraum variabel einstellbar, kann auch die Position des Druckpunkts auf der Kontur des Teilraums günstig gewählt werden, falls der Schwerpunkt des Teilraums nicht stabil gelagert ist. Mit anderen Worten kann, wenn ein Teilraum nicht statisch stabil ist, für die meisten Teilräume und Positionen von Auflageräumen eine "stabile" Druckposition gefunden werden. Dazu wird zuerst für jede mögliche Alternativlage ein Suchraum analog zum vorherigen Vorhergehen aufgespannt. Dann wird die Alternativlage gewählt, die die beste statische Stabilität des Bauteils gewährleistet und die geringste Verschiebung im Vergleich zur Ausgangslage aufweist. Anschließend wird die Stabilität des Teilraums für jeden oder eine Auswahl von Punkten auf der Kontur als Druckpunkt bewertet. Die Position des Druckpunkts mit der geringsten Kippneigung (stabilste Drehmomentsituation) wird als Druckpunkt ausgewählt, wenn der Teilraum für diesen Punkt und diese Alternativlage stabil ist. Ist letzteres nicht der Fall, kann der Teilraum in der Ausgangslage hinsichtlich des besten Druckpunkts untersucht werden. Die Position des Druckpunkts mit der geringsten Kippneigung in der Ausgangslage wird dann als Druckpunkt gewählt und geht in die Gesamtbewertung ein.

Beim Schachteln mit einem variablen und damit optimierbaren Druckpunkt wird somit die Anordnungsvorschrift angepasst und es wird zusätzlich untersucht, wie groß die mögliche Verbesserung hinsichtlich des Verkippens im Vergleich zur Materialausnutzung ist, wenn der Schwerpunkt nicht stabil gelagert ist. Dazu wird die Stabilität für jeden oder eine Auswahl von Punkt auf der Außenkontur als Druckpunkt geprüft. Der Suchraum wird somit dreidimensional, denn jeder Alternativlage wird noch eine Mehrzahl von Druckpunktpositionen zugeordnet.

Ein beispielhaftes prozessorientiertes Schachteln mit einem variablen Druckpunkt erreicht dabei im in Fig. 7C gezeigten Schachtelungsplan 81C 43 stabile Teilräume und 5 nicht getragene Teilräume, 2 kippgefährdete Teilräume und keine nicht eindeutig zuzuordnende Teilräume.

Hinsichtlich des im Planungsraum beanspruchten Platzes nehmen die Bottom-Left-Strategie für obigen Fall eine Streifenlänge L (beispielhaft in Fig. 7B angedeutet) von 862 mm, das prozessorientiertes Schachteln im Schachtelungsplan 81C mit einem variablen Anfahrpunkt 946 mm und die leichte bzw. starke Schachtelung (Schachtelungspläne 81A und 81B) 1107 mm und 1227 mm ein.

Figuren 8 bis 12 beziehen sich auf einen beispielhaften Bewertungsansatz zur Bewertung eines Schachtelungsplans hinsichtlich des Einflusses von Auflageräumen auf den Schneidprozess.

Fig. 8 zeigt den Teilraum 9B aus Fig. 2 vergrößert. Man erkennt die Außenkontur 31A', die den Teilraum 9B begrenzt, sowie beispielhaft punktförmige Auflageräume 27. Auflageräume 27 in den Bereichen 83 fallen im Wesentlichen mit der Außenkontur 31A' im Bereich der Einschnitte 85 zusammen. Auflageräume 27 in einem Bereich 85 liegen in der Nähe der Außenkontur 31A' im Bereich der Einschnitte 85. Auflageräume 27 in einem Bereich 87 liegen fern von der Außenkontur 31A'. Der nachfolgend erläuterte Bewertungsvorgang differenziert die Auswirkungen der Auflageräume 27 auf den Schneidprozess u. a. für derartige Kategorien von Relativpositionen zwischen Auflageraum und Kontur.

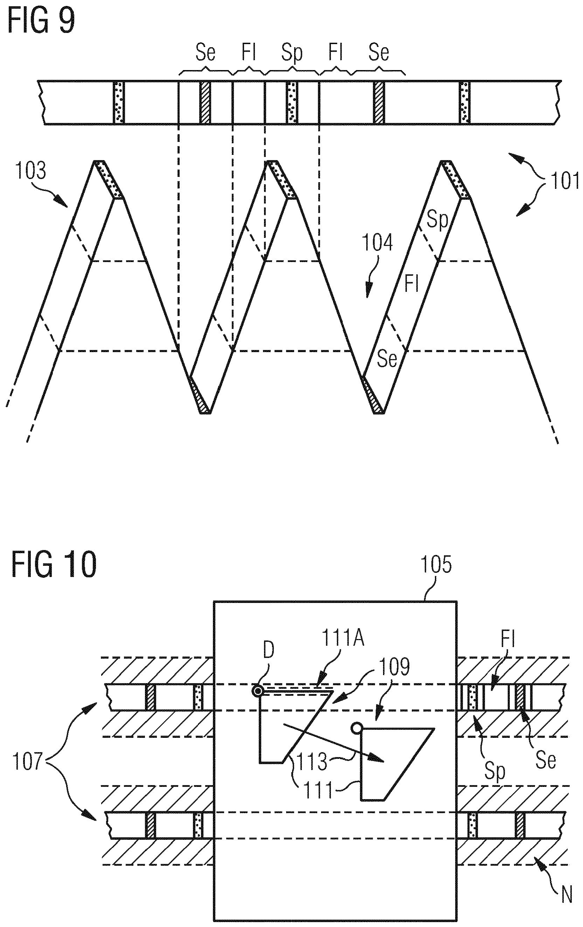

Die Relativpositionen werden in Fig. 9 mit einer Aufsicht auf einen Auflagesteg 101 und einer schematischen Perspektivansicht des Auflagestegs 101 beispielhaft anhand einer Stegstruktur verdeutlicht, bei der Auflagespitzen 103 durch "V"-förmige Senken 104 voneinander getrennt werden. Die Materialtafel liegt während des Schneidprozesses stationär auf einer Vielzahl von Auflagespitzen 103.

Für einen derartigen Auflagesteg zeigt Fig. 10 einen Ausschnitt 105 eines Planungsraums durch den zwei Aufreihungen 107 von (Lagerungs-) Räumen verlaufen, die in Bezug zu den Auflageräumen stehen, die beispielsweise durch die Stegstruktur der Fig. 9 gebildet werden könnten.

Ferner zeigt Fig. 10 einen Teilraum 109, bei dem der Druckpunkt D und ein Abschnitt 111A einer den Teilraum 109 begrenzenden Außenkontur 111 über einer der Aufreihungen 107 verläuft. Zusätzlich zeigt Fig. 10 den Teilraum 109 nach einer Verschiebung entlang eines Pfeils 113, wodurch die Außenkontur 111 sich nun zwischen den Aufreihungen 107 befindet.

Mehrere mögliche Kategorien von Relativpositionen zwischen Positionen/Abschnitten der Kontur und den Aufreihungen von Lagerungsräumen können als Räume im Planungsraum definiert werden. Beispiele für Kategorien aus Sicht der Umsetzung des Schachtelungsplans auf die Materialtefel sind:
- aufliegend (Spitzen-Raum SP),
- neben einer Auflagespitze 103 und mit geringen Abstand oberhalb der Oberfläche der Lagerung, z. B. oberhalb des Auflagestegs 101 (Flanken-Raum Fl),
- zwischen den Auflagespitzen 103 und mit großem Abstand oberhalb der Oberfläche der Lagerung (Senken-Raum Se) und
- nahe/direkt neben einem Auflagesteg 101 (Nähe -Raum N).

Die Räume Sp, Fl, Se aus dem Planungsraum sind zur Verdeutlichung auch in der physischen Darstellung des in Fig. 9 gezeigten Auflagestegs angedeutet. Ähnlich sind auch schematisch die Positionen der Spitzen und Senken im Planungsraum angedeutet.

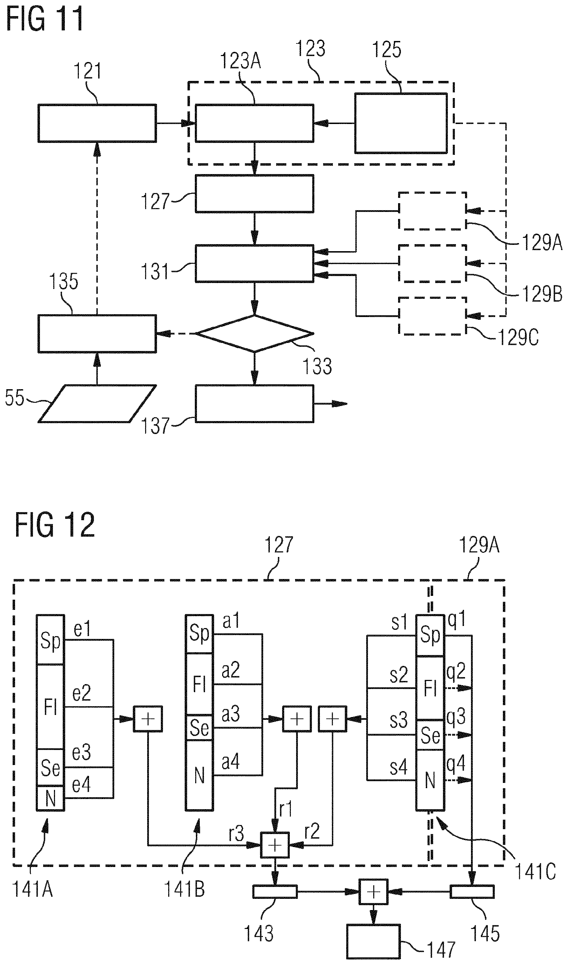

Fig. 11 zeigt einen beispielhaften Ablauf einer Positionsdaten einbeziehenden Bewertung einer Lage eines Teilraums; d. h., es werden Relativlagen zwischen Räumen der Lagerung und einem Teilraum berücksichtigt. Das Bewertungsverfahren des im Planungsraum definierten Schachtelungsplans betrifft in der Umsetzung den Schneidprozess einer Anordnung von Werkstücken auf einer Materialtafel, die mit einer Flachbettwerkzeugmaschine gemäß werkstückspezifischen Schneidkonturen auszuschneiden sind. Die Flachbettwerkzeugmaschine weist zur Lagerung der Materialtafel beispielsweise eine Palette mit einer Mehrzahl von Auflagestegen auf, wobei jeder Auflagesteg eine Mehrzahl von Stegspitzen aufweist, auf denen beim Schneidvorgang die Materialplatte ortsfest liegt.

Es wird somit davon ausgegangen, dass Positionsdaten, die die Positionen der Lagerungsräume, insbesondere der Auflageräume, im Planungsraum angeben, bekannt sind. In der Umsetzung des Schachtelungsplans bedeutet dies, dass entweder die Materialtafel entsprechend auf den Stegspitzen der Palette auszurichten ist oder dass Lagedaten der Materialtafel bezüglich der Palette vor der Durchführung des Verfahrens bestimmt werden. Allgemein werden somit Positionen der Auflagestege, der Stegspitzen bezüglich der Palette und/oder bezüglich der Materialtafel erfasst und/oder bereitgestellt. Evtl. werden zusätzlich Anordnungsdaten bezüglich der Anordnung der Planungstafel auf der Materialtafel gemessen oder vorbestimmt.

Fig. 11 kann ein Teilschritt sein, der im Verfahren zur Erzeugung des Schachtelungsplans der Teilräume (Konturen der Teilräume entsprechen den späteren Schneidlinien) für einen Schneidvorgang durchgeführt wird. In ihm soll eine Beschädigungsrate für eine Kontur bestimmt werden. Dazu werden Lagerungsraum-nahe (d. h., stegnahen Abschnitte) der Kontur untersucht und beispielsweise in die obigen Raumkategorien Sp, Fl, Se, N untergliedert. Dies umfasst u. a. ein Untergliedern der Räume, die bei der Umsetzung des Schachtelungsplans über einem oder neben einem Auflagesteg liegen würden.

Zur Berechnung der Beschädigungsrate eine Kontur werden die Räume mit Gewichtungsfaktoren versehen, die eine Beschädigungswahrscheinlichkeit der Auflagestege in Abhängigkeit von den Bereichen und Schneidarten definieren. Dabei kann auch der Schneidvorgang mit Gewichtungen versehen werden, wenn er mehrere Schneidarten einsetzt, die beispielsweise nach eingebrachter Laserleistung differenziert werden. Schneidarten können den Einstich, das Anfahren der Kontur und das Scheiden entlang der Kontur betreffen.

Abschließend wird eine Bewertungsgröße des Schachtelungsplans basierend auf der berechneten Beschädigungsrate der Kontur ausgegeben und im Schachtelungsverfahren zur Bewertung einer Lage eines Teilraums genutzt.

Dieses Grundkonzept spiegelt sich im Flussdiagramm der Fig. 11 wider. Die Bewertung beginnt mit dem Platzieren eines Teilraums in einer zu bewertende Lage im Planungsraum (Schritt 121). Je nach Stand im Schachtelungsverfahren kann dies z. B. die Initiallage, eine Ausgangslage oder eine Alternativlage sein.

Im Schritt 123 werden die einzelnen Positionen der Kontur des Teilraums untersucht. Insbesondere wird die Schnittmenge der Kontur des Teilraums mit den Lagerungsräumen (Sp, Fl, Se, N) gebildet (Schritt 123A) und entsprechende Positionen der Kontur werden gespeichert. Werden zusätzlich bei der Kontur vorgesehene Schneidarten bereitgestellt (Schritt 125), können die einzelnen Positionen ferner mit den angesprochen Schneidarten assoziiert werden.

Darauf basierend werden Stegbeschädigungswerte, beispielsweise wie nachfolgend in Zusammenhang mit Fig. 12 erläutert, berechnet (Schritt 127).

Sollen weitere positionsabhängige Bewertungen berücksichtigt werden, beispielsweise eine Teilqualität (Schritt 129A), eine Kippauswertung (129B) oder eine Butzenanalyse (129C), können diese mit in einen Bewertungswert einfließen (Schritt 131), der für die zu bewertende Lage des Raumteils abgelegt wird.

Nun wird geprüft, ob eine weitere Lage zu bewerten ist (Schritt 133). Ist dies der Fall, beispielsweise wenn in einem Suchraum 55 noch nicht alle Alternativlage geprüft wurden, kann eine Alternativlage ausgewählt werden (Schritt 135) und als zu bewertende Lage in Schritt 121 dem Bewertungsverfahren zugeführt werden.

Sind alle Lagen durchlaufen, wird die mit dem besten Bewertungswert ausgewählt und z. B. als Schneidlage ausgegeben (Schritt 137). Gemäß der Anordnungsvorschrift wird nun der nächste Teilraum eingefügt und seine Ausgangslage wird zur zu bewertenden Lage. Dies wird fortgesetzt bis alle Teilräume der Einfügereihenfolge eingefügt wurden. Alle Bewertungswerte zusammen bilden dann den Gesamtbewertungswert des sich ergebenden Schachtelungsplans.

Fig. 12 gibt ein Beispiel für Berechnungen, die dem Schritt 127 (Berechnung des Beschädigungsrisikos) und dem Schritt 129A (Berechnung der Teilequalität) zugrunde liegen können. Gezeigt sind drei Balken 141A, 141B, 141C, in denen gemäß der Schnittmengenbildung in Schritt 123A der Fig. 11 Positionen der Kontur zusammengefasst sind, die den Räumen Sp, Fl, Se, N zugeordnet sind. Dabei wurden die Schneidarten Einstich (Balken 141A), Anfahren mit reduzierter Leistung (Balken 141B) und Schneiden (Balken 141C) berücksichtigt. Jedem Typ von Lagerungsraum Sp, Fl, Se, N sind Schneidart-spezifische Gewichtungsfaktoren e1-e4, a 1 -a4, s1-s4 zugeordnet. Mit diesen Gewichtungen fließen die Punkte auf der Kontur in die Lagerungsraum-spezifische Bewertung ein. Auch den Schneidarten können Gewichtungsfaktoren r1-r3 zugeordnet werden, die in die Schneidart-spezifische Kombination einfließen. Auf diese Weise kann für das Beschädigungsrisiko ein Stegbeschädigungsbewertungswert 143 bestimmt werden.

Für die Positionen auf der Kontur, die beispielsweise nur dem Schneiden (Balken 141C) zugeordnet sind, kann ferner eine Qualität der sich aus den Teilraumlagen ergebenden Werkstücke bewertet werden. Hierzu werden Lagerungsraum-spezifische Gewichtungsfaktoren q1-q4 verwendet, so dass für die Teilequalität ein Teilequalitätsbewertungswert 145 bestimmt werden kann. Dieser kann mit dem Stegbeschädigungsbewertungswert 143 zu einem Gesamtbewertungswert 147 der Kontur und damit des Teilraums kombiniert werden.

Man erkennt, dass den Auflageräumen 27 (Spitzen-Räumen Sp) mithilfe der Positionsdaten Abschnitte der Kontur oder Positionen entlang der Kontur zur Bewertung eines in einer Alternativlage 46 positionierten Teilraums zugeordnet werden. Ein Bewertungswert der Lage des zu bewertenden Teilraums wird sodann in Abhängigkeit des Ausmaßes der zugeordneten Abschnitte der Kontur oder der Positionen entlang der Kontur für den Auflageraum bestimmt.

Neben den Auflageräumen 27 können weiteren Lagerungsräume Fl, N, Se im Planungsraum identifiziert werden. Auch diesen können mithilfe der Positionsdaten Abschnitte der Kontur oder Positionen entlang der Kontur zur Bewertung eines in einer Alternativlage 46 positionierten Teilraums zugeordnet werden.

Bewertungswerte für die Lagerungsräume Fl, N, Se werden in Abhängigkeit des Ausmaßes der den weiteren Lagerungsräumen zugeordneten Abschnitte der Kontur oder der Positionen entlang der Kontur bestimmt. Entsprechend können die Bewertungswerte der Auflageräume und der weiteren Lagerungsräume mit Gewichtungen kombiniert werden, um einen Bewertungswert für eine zu bewertende Lage des Teilraums zu gewinnen.

Allgemein können die Gewichtungen von einem Energieeintragswert abhängen, wobei eine Gewichtung für einen Schneidvorgang im Stegspitzen-Raum größer sein kann (z. B. maximal ist). Geringere Gewichtungen können für einen Schneidvorgang im Stegflanken-Raum, für einen Schneidvorgang im Stegsenken-Raum und für einen Schneidvorgang im Raum nahe/direkt neben der Aufreihung der genannten Räume verwendet werden.

Zusammenfassend ausgedrückt mit Worten einer Kostenbeurteilung kann die hierin offenbarte Schachtelungsvorgehensweise für jede Lösung die Güte der Lösung bewerten. Dabei umfasst die Gütefunktion neben dem Rohmaterialverbrauch auch:
- die Kosten durch Kollisionen des Schneidkopfs mit verkippten Teilen,
- die Kosten durch Beschädigung von Auflagestegen,
- Qualitätskosten durch Fehlproduktion, Nachbearbeitung und Wartung und/oder
- die Kosten aufgrund längerer Schnittzeiten und höherer Abschreibungen.

Es wird explizit betont, dass alle in der Beschreibung und/oder den Ansprüchen offenbarten Merkmale als getrennt und unabhängig voneinander zum Zweck der ursprünglichen Offenbarung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe. Der Schutzumfang der Erfindung wird nur durch die folgenden Ansprüche definiert.

## Patentansprüche

1. Computerimplementiertes Verfahren (39) zur Erzeugung eines Schachtelungsplans (49A) für eine Ansteuerung eines Schneidprozesses einer Flachbettwerkzeugmaschine (1) zum Ausschneiden von Werkstücken aus einer Materialtafel, wobei der Schachtelungsplan (49A) eine überlappungsfreie Anordnung von den Werkstücken entsprechenden Teilräumen (9A, 9B, ...) in einem zweidimensionalen Planungsraum (23) sowie eine räumliche Anordnung von vorbestimmten Auflageräumen (17) umfasst, wobei die Auflageräume (17) Lagerungsoberflächenbereichen der Materialtafel entsprechen, die während des Schneidprozesses gelagert sind, mit den Schritten:
sequenzielles Anordnen von Teilräumen (9A, 9B, ...) gemäß einer Einfügereihenfolge und einer Anordnungsvorschrift im Planungsraum (23), wobei die Anordnungsvorschrift einem neu eingefügten Teilraum (9A, 9B, ...) im Planungsraum (23) jeweils eine Ausgangslage (54) zuordnet, in der mindestens ein Punkt des Teilraums (9A, 9B, ...) im Werkstückmindestabstand (MA) von einem anderen bereits eingefügten Teilraum (9A, 9B, ...) angeordnet ist,
Bewerten der Ausgangslage (54) mit einer Packungsdichtenbewertung und mindestens einer die Positionsdaten einbeziehenden Bewertung,
Aufspannen, in Abhängigkeit eines Bewertungsergebnisses der Ausgangslage (54) eines neu eingefügten Teilraums (9A, 9B, ...), eines lokalen Suchraums (55), der für den neu eingefügten Teilraum (9A, 9B, ...) mindestens eine Alternativlage (56) umfasst,
Bewerten der mindestens einen Alternativlage (56) mit der Packungsdichtenbewertung und der mindestens einen die Positionsdaten einbeziehenden Bewertung und
Vergleichen der Bewertungsergebnisse der Ausgangslage (54) und der mindestens einen Alternativlage (56), um spezifisch für die Einfügereihenfolge eine der bewerteten Lagen als Schneidlage (58) für den neu eingefügten Teilraum (9A, 9B, ...) im Schachtelungsplan (49A) festzulegen,
Ausgeben eines Schachtelungsplans (49A), der die an den Schneidlagen (58) angeordneten Teilräume (9A, 9B, ...) umfasst,
wobei den Auflageräumen (27, Sp) mithilfe der Positionsdaten Abschnitte der Kontur oder Positionen entlang der Kontur zur Bewertung eines in einer Alternativlage (46) positionierten Teilraums (9A, 9B, ...) zugeordnet werden,
**dadurch gekennzeichnet, dass** beim Bewerten eines in einer Alternativlage positionierten Teilraums ein Bewertungswert der Lage des zu bewertenden Teilraums in Abhängigkeit des Ausmaßes der zugeordneten Abschnitte der Kontur oder der Positionen entlang der Kontur für den Auflageraum bestimmt wird.

2. Verfahren nach Anspruch 1, ferner mit Bereitstellen von Schneidprozessdaten umfassend
- Geometriedaten des Planungsraums (23), in dem die Teilräume (9A, 9B, ...) angeordnet werden können,
- Positionsdaten, die die Positionen der Auflageräume (27) im Planungsraum (23) angeben,
- eine Mehrzahl von Teilräumen (9A, 9B, ...), die jeweils einem Werkstücktyp entsprechen, und
- Anzahldaten, die Stückzahlen der im Planungsraum (23) zu schachtelnden Teilräume (9A, 9B, ...) angeben.

3. Verfahren (39) nach einem der vorhergehenden Ansprüche, wobei
der lokale Suchraum (55) eindimensional oder zweidimensional im Planungsraum (23) ausgebildet ist und sich insbesondere im Planungsraum (23) weg von bereits eingefügten Teilräumen (9A, 9B, ...) erstreckt, und/oder
der lokale Suchraum (55) derart aufgespannt wird, dass er Alternativlagen (56) umfasst, für deren Einnahme durch den einzufügenden Teilraum (9A, 9B, ...) der einzufügende Teilraum (9A, 9B, ...) von der Ausgangslage (54) in eine nicht materialoptimierte Richtung im Planungsraum (23) zu verschieben ist, und/oder
zum Aufspannen des lokalen Suchraums (55) Alternativlagen (56) durch Anwenden einer Translations- und/oder Rotationsoperation im Planungsraum (23) auf die Ausgangslage (54) oder eine andere Alternativlage (56), insbesondere durch Translationsoperation in eine nicht materialoptimierte Richtung, erzeugt werden, wobei die Randbedingung einer überlappungsfreien Anordnung eingehalten wird.

4. Verfahren (39) nach einem der vorhergehenden Ansprüche, wobei mehrere die Positionsdaten einbeziehenden Bewertungen (127, 129A-C) für eine zu bewertende Lage des Teilraums (9A, 9B, ...) vorgenommen werden und die Bewertungswerte dieser Bewertungen (127, 129A-C) und der Packungsdichtenbewertung mit Gewichtungen (W_{PG}, W_{T}, W_{SD}) zur Bestimmung eines Bewertungswerts der zu bewertenden Lage des Teilraums (9A, 9B, ...) kombiniert werden.

5. Verfahren (39) nach Anspruch 5, wobei die Gewichtungen (W_{PG}, W_{T}, W_{SD}) gewählt werden, um eine bestimmte Charakteristik des Schachtelungsplans (49A) zu erzielen.

6. Verfahren (39) nach Anspruch 5, wobei der lokale Suchraum (55) in seiner Größe durch die Gewichtungen (W_{PG}, W_{T}, W_{SD}) variabel einstellbar ist.

7. Verfahren (39) nach einem der vorhergehenden Ansprüche, wobei weitere Lagerungsräume (Fl, N, Se), die in Bezug zu den Auflageräumen stehen, im Planungsraum (23) identifiziert werden und diesen mithilfe der Positionsdaten Abschnitte der Kontur oder Positionen entlang der Kontur zur Bewertung eines in einer Alternativlage (46) positionierten Teilraums (9A, 9B, ...) zugeordnet werden,
Bewertungswerte für die Lagerungsräume (Fl, N, Se) in Abhängigkeit des Ausmaßes der den weiteren Lagerungsräumen zugeordneten Abschnitte der Kontur oder der Positionen entlang der Kontur bestimmt werden, und
die Bewertungswerte der Auflageräume (27, Sp) und der weiteren Lagerungsräume (Fl, N, Se) mit Gewichtungen kombiniert werden, um einen Bewertungswert (143, 145) für eine zu bewertende Lage des Teilraums (9A, 9B, ...) zu gewinnen.

8. Verfahren (39) nach einem der vorhergehenden Ansprüche, wobei
ein Teilraum (9A, 9B, ...) durch eine Kontur (67) und optional einen Rotationszustand im zweidimensionalen Planungsraum (23) definiert ist und
der Suchraum (55) durch die mindestens einige der möglichen Positionen (P1, ...) eines Druckpunkts (D) auf einer Kontur (67) eines zu bewertenden Teilraums (9A, 9B, ...) aufgespannt wird, wobei der Druckpunkt (D) der Punkt ist, an dem der Schnitt abgeschlossen werden soll.

9. Verfahren (39) nach einem der vorhergehenden Ansprüche, wobei
der Werkstückmindestabstand (MA) spezifisch für ein zu schneidendes Material und für einen Schneidvorgang bereitgestellt wird und, insbesondere abhängig von Parametern des Materials und des Schneidprozesses, vorbestimmt ist, und/oder
der Werkstückmindestabstand (MA) hinsichtlich der geschachtelten Alternativlagen (56) und hinsichtlich der Schneidlinien (10) umgesetzt wird.

10. Verfahren (39) nach einem der vorhergehenden Ansprüche, wobei der Suchraum (55) derart aufgespannt wird, dass
in der Alternativlage (56) der neu eingefügte Teilraum (9A, 9B, ...) in mindestens einer Richtung einen größeren Abstand von einem bereits eingefügten Teilraum (9A, 9B, ...) aufweist als der neu eingefügte Teilraum (9A, 9B, ...) in der Ausgangslage (54), und/oder
in der Alternativlage (56) der neu eingefügte Teilraum (9A, 9B, ...) in mindestens einer Richtung von der Ausgangslage (54) verschoben angeordnet ist und überlappungsfrei hinsichtlich bereits eingefügter Teilräume (9A, 9B, ...) ist.

11. Verfahren (39) nach einem der vorhergehenden Ansprüche, wobei der Anordnungsvorschrift mindestens eine Annäherungsrichtung (53A, 53B) zugeordnet ist und der lokale Suchraum (55) derart aufgespannt wird, dass in der Alternativlage (56) der neu eingefügte Teilraum (9A, 9B, ...) in einer Richtung (59) entgegen mindestens einer der mindestens einen Annäherungsrichtung (53A, 53B) von der Ausgangslage (54) verschoben angeordnet ist.

12. Verfahren (39) nach einem der vorhergehenden Ansprüche, wobei eine initiale Anordnung des ersten Teilraums (9A, 9B, ...) mithilfe der die Positionsdaten einbeziehenden Bewertung an die Positionsdaten durch eine Translations- und/oder Rotationsoperation angepasst wird.

13. Verfahren (39) nach einem der vorhergehenden Ansprüche, ferner mit
Erfassen der Positionsdaten durch eine Sensorik der Flachbettwerkzeugmaschine, eine optische Sensorik und/oder eine Ultraschall-Sensorik.

14. Verfahren (71) zur Bestimmung eines schneidprozessorientierten Schachtelungsplans (79A) für eine Ansteuerung eines Schneidprozesses einer Flachbettwerkzeugmaschine (1) zum Ausschneiden von Werkstücken (9) aus einer Materialtafel (7), wobei der schneidprozessorientierte Schachtelungsplan (79A) eine überlappungsfreie Anordnung von den Werkstücken (9) entsprechenden Teilräumen (9A, 9B, ...) in einem zweidimensionalen Planungsraum (23) sowie eine räumliche Anordnung von vorbestimmten Auflageräumen (27) umfasst, wobei die Auflageräume (27) Lagerungsoberflächenbereichen der Materialtafel (7) entsprechen, die während des Schneidprozesses gelagert sind, mit den Schritten:
Bereitstellen einer Mehrzahl von Einfügereihenfolgen der Teilräume (9A, 9B, ...), wobei die Einfügereihenfolgen Gene einer ersten Generation eines evolutionären Algorithmus darstellen,
Erzeugen eines Schachtelungsplans (49A) für jede der Einfügereihenfolgen gemäß einem Verfahren nach einem der Ansprüche 1 bis 13, sodass in den Schachtelungsplänen (49A) die Teilräume (9A, 9B, ...) an entsprechend für die jeweilige Einfügereihenfolge festgelegten Schneidlagen (58) angeordnet sind,
Erstellen einer Gesamtbewertung für jeden der Schachtelungspläne (49A) basierend auf den Packungsdichtenbewertungen und den mindestens einen die Positionsdaten einbeziehenden Bewertungen der Schneidlagen (58) des jeweiligen Schachtelungsplans (49A), wobei die Gesamtbewertungen die Anwendung einer Fitnessfunktion auf die Gene des evolutionären Algorithmus darstellen,
wiederholtes Erstellen weiterer Einfügereihenfolgen durch Mutation, Crossover und/oder Selektion bestehender Einfügereihenfolgen unter Verwendung der bestehenden Gesamtbewertungen, Erzeugen weiterer Schachtelungspläne (49A) gemäß einem Verfahren nach einem der Ansprüche 1 bis 13, und Erstellen von weiteren Gesamtbewertungen für die weiteren Einfügereihenfolgen, und
Vergleichen der Gesamtbewertungen, um den schneidprozessorientierten Schachtelungsplan (79A) aus der Menge der erzeugten Schachtelungspläne (49A) auszuwählen.

## Claims

1. A computer-implemented method (39) for generating a nesting plan (49A) for controlling a cutting process of a flatbed machine tool (1) for cutting out workpieces from a material panel, wherein the nesting plan (49A) comprises a non-overlapping arrangement of sub-spaces (9A, 9B, ...) in a two-dimensional planning space (23), the sub-spaces corresponding to the workpieces, as well as a spatial arrangement of predetermined support spaces (17), wherein the support spaces (17) correspond to bearing surface regions of the material panel, the regions being supported during the cutting process, the method having the steps of:
sequentially arranging sub-spaces (9A, 9B, ...) in the planning space (23) according to an insertion sequence and an arrangement rule, the arrangement rule assigning, in the planning space (23), an initial position (54) to each newly inserted sub-space (9A, 9B, ...), at least one point of each sub-space (9A, 9B, ...) in said initial position being arranged at the workpiece minimum distance (MA) away from another sub-space (9A, 9B, ...) that has already been inserted,
evaluating the initial position (54) using a packing density evaluation and at least one evaluation which incorporates the position data,
setting up, on the basis of an evaluation result of the initial position (54) of a newly inserted sub-space (9A, 9B, ...), a local search space (55) that includes at least one alternative position (56) for said newly inserted sub-space (9A, 9B, ...),
evaluating the at least one alternative position (56) using the packing density evaluation and the at least one evaluation which incorporates the position data and
comparing the evaluation results of the initial position (54) to the at least one alternative position (56) in order to establish, specifically for the insertion sequence, one of the evaluated positions as the cutting position (58) for the newly inserted sub-space (9A, 9B, ...) in the nesting plan (49A),
outputting a nesting plan (49A) which includes the sub-spaces (9A, 9B, ...) arranged at the cutting positions (58),
wherein sections of the contour, or positions along the contour, are assigned to the support spaces (27, Sp) using the position data in order to evaluate a sub-space (9A, 9B, ...) that is positioned in an alternative position (46),
**characterized in that** in the evaluation of a sub-space that is positioned in an alternative position, an evaluation value of the position of the sub-space to be evaluated is determined for the support space on the basis of the extent of the sections of the contour, or on the positions along the contour, that have been assigned.

2. The method according to claim 1, further providing cutting process data which include
- geometry data of the planning space (23) in which the sub-spaces (9A, 9B, ...) can be arranged,
- position data indicating positions of the support spaces (27) in the planning space (23),
- a plurality of sub-spaces (9A, 9B, ...), each of which corresponds to a workpiece type, and
- number data indicating quantities of the sub-spaces (9A, 9B, ...) to be nested in the planning space (23).

3. The method (39) according to one of the preceding claims, wherein
the local search space (55) is formed one-dimensionally or two-dimensionally in the planning space (23) and in particular extends away from the sub-spaces (9A, 9B, ...) that have already been inserted in the planning space (23), and/or
the local search space (55) is set up such that it includes alternative positions (56) for which, if the positions are to be assumed by the sub-space (9A, 9B, ...) to be inserted, said sub-space (9A, 9B, ...) to be inserted must be displaced in a non-material-optimized direction from the initial position (54) in the planning space (23), and/or
to set up the local search space (55), alternative positions (56) are generated by applying a translation and/or rotation operation to the initial position (54) or another alternative position (56) in the planning space (23), in particular by applying a translation operation in a non-material-optimized direction, wherein the boundary condition of a non-overlapping arrangement is preserved.

4. The method (39) according to one of the preceding claims, wherein multiple evaluations (127, 129A-C) are performed for a position of the sub-space (9A, 9B, ...) to be evaluated, the evaluations incorporating the position data, and the evaluation values of these evaluations (127, 129A-C) and of the packing density evaluation are combined, with weightings (W_{PG}, W_{T}, W_{SD}), to determine an evaluation value of the position of the sub-space (9A, 9B, ...) to be evaluated.

5. The method (39) according to claim 5, wherein the weightings (W_{PG}, W_{T}, W_{SD}) are selected to achieve a specific nesting plan (49A) characteristic.

6. The method (39) according to claim 5, wherein the size of the local search space (55) is variably adjustable using the weightings (W_{PG}, W_{T}, W_{SD}).

7. The method (39) according to one of the preceding claims, wherein further bearing spaces (Fl, N, Se) which relate to the support spaces are identified in the planning space (23), and sections of the contour, or positions along the contour, are assigned to said further bearing spaces using the position data in order to evaluate a sub-space (9A, 9B, ...) positioned in an alternative position (46),
evaluation values for the bearing spaces (Fl, N, Se) are determined on the basis of the extent of the sections of the contour assigned to the further bearing spaces or on the basis of the positions along the contour, and
the evaluation values of the support spaces (27, Sp) and the further bearing spaces (Fl, N, Se) are combined, with weightings, to obtain an evaluation value (143, 145) for a position of the sub-space (9A, 9B, ...) to be evaluated.

8. The method (39) according to one of the preceding claims, wherein
a sub-space (9A, 9B, ...) is defined by a contour (67) and optionally by a rotational state in the two-dimensional planning space (23), and
the search space (55) is set up by the at least some of the possible positions (P1, ...) of a pressure point (D) on a contour (67) of a sub-space (9A, 9B, ...) to be evaluated, wherein the pressure point (D) is the point at which the cut is to be completed.

9. The method (39) according to one of the preceding claims, wherein
the workpiece minimum distance (MA) is provided specifically for a material to be cut and for a cutting process, and is predetermined, in particular on the basis of parameters of the material and of the cutting process, and/or
the workpiece minimum distance (MA) is implemented with respect to the nested alternative positions (56) and with respect to the cutting lines (10).

10. The method (39) according to one of the preceding claims, wherein the search space (55) is set up such that
in the alternative position (56), in at least one direction, the newly inserted sub-space (9A, 9B, ...) has a greater distance from a sub-space (9A, 9B, ...) which has already been inserted than the newly inserted sub-space (9A, 9B, ...) has in the initial position (54), and/or
in the alternative position (56), in at least one direction, the newly inserted sub-space (9A, 9B, ...) is arranged displaced from the initial position (54) and is non-overlapping with respect to sub-spaces (9A, 9B, ...) which have already been inserted.

11. The method (39) according to one of the preceding claims, wherein at least one approach direction (53A, 53B) is assigned to the arrangement rule, and the local search space (55) is set up such that in the alternative position (56) the newly inserted sub-space (9A, 9B, ...) is arranged displaced from the initial position (54) in a direction (59) that is opposite to at least one of the at least one approach direction (53A, 53B).

12. The method (39) according to one of the preceding claims, wherein, using the evaluation which incorporates the position data, an initial arrangement of the first sub-space (9A, 9B, ...) is adapted to the position data by means of a translation and/or rotation operation.

13. The method (39) according to one of the preceding claims, further comprising
acquiring the position data using a sensor system of the flatbed machine tool, an optical sensor system, and/or an ultrasonic sensor system.

14. A method (71) for determining a cutting process-oriented nesting plan (79A) for controlling a cutting process of a flatbed machine tool (1) for cutting out workpieces (9) from a material panel (7), wherein the cutting process-oriented nesting plan (79A) comprises a non-overlapping arranging of sub-spaces (9A, 9B, ...), which correspond to the workpieces (9), in a two-dimensional planning space (23), and a spatial arranging of predetermined support spaces (27), wherein the support spaces (27) correspond to bearing surface regions of the material panel (7) which are supported during the cutting process, the method comprising the steps of:
providing a plurality of insertion sequences of the sub-spaces (9A, 9B, ...), wherein the insertion sequences represent genes of a first generation of an evolutionary algorithm,
generating a nesting plan (49A) for each of the insertion sequences according to a method according to one of claims 1 to 13 such that in the nesting plans (49A), the sub-spaces (9A, 9B, ...) are arranged at cutting positions (58) which are established accordingly for each insertion sequence,
creating an overall evaluation value for each of the nesting plans (49A) based on the packing density evaluations and the at least one evaluation which incorporates position data of the cutting positions (58) of the respective nesting plan (49A), wherein the overall evaluation values represent the application of a fitness function to the genes of the evolutionary algorithm,
using the existing overall evaluation values, repeatedly creating further insertion sequences by means of mutation, crossover, and/or selection of existing insertion sequences, generating further nesting plans (49A) according to a method according to one of claims 1 to 13, and creating further overall evaluation values for the further insertion sequences, and
comparing the overall evaluation values in order to select the cutting process-oriented nesting plan (79A) from the set of generated nesting plans (49A).

## Revendications

1. Procédure (39) mise en oeuvre par ordinateur pour générer un plan d'imbrication (49A) pour une commande d'un procédé de découpe d'une machine-outil à banc plat (1) destinée à découper des pièces à partir d'une feuille de matériau, le plan d'imbrication (49A) comprenant un agencement sans chevauchement d'espaces partiels (9A, 9B, ...) correspondant aux pièces dans un espace de planification (23) bidimensionnel, ainsi qu'un agencement spatial d'espaces d'appui (17) prédéterminés, les espaces d'appui (17) correspondant à des zones de surfaces de support de la feuille de matériau, qui sont soutenues pendant le procédé de découpe, incluant les étapes :
agencement séquentiel d'espaces partiels (9A, 9B, ...) selon un ordre d'insertion et une directive d'agencement dans l'espace de planification (23), la directive d'agencement attribuant à chaque nouvel espace partiel (9A, 9B, ...) inséré dans l'espace de planification (23) un emplacement de départ (54), où au moins un point de l'espace partiel (9A, 9B, ...) est disposé à la distance minimale (MA) d'un autre espace partiel (9A, 9B, ...) déjà inséré,
évaluation de l'emplacement de départ (54) avec une évaluation de densité de placement et au moins une évaluation incluant des données de position,
déploiement, en fonction du résultat de l'évaluation de l'emplacement de départ (54) d'un nouvel espace partiel (9A, 9B, ...) inséré, d'un espace de recherche local (55), comprenant au moins un emplacement alternatif (56) pour le nouvel espace partiel (9A, 9B, ...) inséré,
évaluation d'au moins un emplacement alternatif (56) avec l'évaluation de densité de placement et au moins une évaluation incluant les données de position et
comparaison des résultats d'évaluation de l'emplacement de départ (54) et d'au moins un emplacement alternatif (56) afin de déterminer spécifiquement, pour l'ordre d'insertion, l'une des positions évaluées en tant que emplacement de découpe (58) pour le nouvel espace partiel (9A, 9B, ...) inséré dans le plan d'imbrication (49A),
émission d'un plan d'imbrication (49A) comprenant les espaces partiels (9A, 9B, ...) disposés selon les emplacements de découpe (58),
dans lequel, à l'aide des données de position, des sections du contour ou des positions le long du contour, sont associées aux espaces d'appui (27, Sp) pour l'évaluation d'un espace partiel (9A, 9B, ...) positionné dans un emplacement alternatif (46),
**caractérisé en ce que,** lors de l'évaluation d'un espace partiel positionné dans un emplacement alternatif, une valeur d'évaluation de l'emplacement de l'espace partiel à évaluer est déterminée en fonction de l'étendue des sections du contour ou des positions le long du contour associées à l'espace d'appui.

2. Procédure selon la revendication 1, avec en outre la mise à disposition de données de procédé de découpe comprenant
- des données de géométrie de l'espace de planification (23), dans lequel les espaces partiels (9A, 9B, ...) peuvent être disposés,
- des données de position indiquant les positions des espaces d'appui (27) dans l'espace de planification (23),
- une pluralité d'espaces partiels (9A, 9B, ...) correspondant chacun à un type de pièce, et
- des données numériques indiquant les quantités de pièces des espaces partiels (9A, 9B, ...) à imbriquer dans l'espace de planification (23).

3. Procédure (39) selon l'une des revendications précédentes, dans laquelle
l'espace de recherche local (55) est défini unidimensionnellement ou bidimensionnellement dans l'espace de planification (23) et s'étend notamment dans l'espace de planification (23) éloigné des espaces partiels (9A, 9B, ...) déjà insérés, et/ou
l'espace de recherche local (55) est déployé de manière à comprendre des emplacements alternatifs (56) pour l'occupation desquels par l'espace partiel (9A, 9B, ...) à insérer, l'espace partiel (9A, 9B, ...) à insérer doit être déplacé de l'emplacement de départ (54) vers une direction non optimisée pour le matériau dans l'espace de planification (23), et/ou
pour le déploiement de l'espace de recherche local (55), des emplacements alternatives (56) sont générées en appliquant une opération de translation et/ou de rotation dans l'espace de planification (23) à l'emplacement de départ (54) ou à un autre emplacement alternatif (56), notamment par une opération de translation dans une direction non optimisée pour le matériau, tout en respectant la contrainte d'agencement sans chevauchement.

4. Procédure (39) selon l'une des revendications précédentes, dans laquelle plusieurs évaluations incluant les données de position (127, 129A-C) sont effectuées pour un emplacement à évaluer de l'espace partiel (9A, 9B, ...) et les valeurs d'évaluation de ces évaluations (127, 129A-C) ainsi que l'évaluation de densité de placement sont combinées avec des pondérations (W_{PG}, W_{T}, W_{SD}) pour déterminer une valeur d'évaluation de l'emplacement de l'espace partiel (9A, 9B, ...) à évaluer.

5. Procédure (39) selon la revendication 5, dans laquelle les pondérations (W_{PG}, W_{T}, W_{SD}) sont choisies pour trouver une caractéristique spécifique du plan d'imbrication (49A).

6. Procédure (39) selon la revendication 5, dans laquelle la taille de l'espace de recherche local (55) est ajusté de manière variable par les pondérations (W_{PG}, W_{T}, W_{SD}).

7. Procédure (39) selon l'une des revendications précédentes, dans laquelle d'autres espaces de support (Fl, N, Se) se rapportant aux espaces d'appui sont identifiés dans l'espace de planification (23), et, à l'aide des données de position, ceux-ci sont associés à des sections du contour ou des positions le long du contour pour l'évaluation d'un espace partiel (9A, 9B, ...) positionné dans un emplacement alternatif (46),
des valeurs d'évaluation pour les espaces de support (Fl, N, Se) sont déterminées en fonction de l'étendue des sections du contour ou des positions le long du contour attribuées aux autres espaces de support, et
les valeurs d'évaluation des espaces d'appui (27, Sp) et des autres espaces de support (Fl, N, Se) sont combinées avec des pondérations afin d'obtenir une valeur d'évaluation (143, 145) pour un emplacement à évaluer de l'espace partiel (9A, 9B, ...).

8. Procédure (39) selon l'une des revendications précédentes, dans laquelle
un espace partiel (9A, 9B, ...) est défini dans l'espace de planification (23) bidimensionnel par un contour (67) et éventuellement un état de rotation, et
l'espace de recherche (55) est déployé par au moins quelques-unes des positions possibles (P1, ...) d'un point de pression (D) sur un contour (67) d'un espace partiel (9A, 9B, ...) à évaluer, le point de pression (D) étant le point où la découpe doit être achevée.

9. Procédure (39) selon l'une des revendications précédentes, dans laquelle
la distance minimale de la pièce (MA) est mise à disposition spécifiquement pour un matériau à découper et un processus de découpe, et est prédéterminée, notamment en fonction des paramètres du matériau et du procédé de découpe, et/ou
la distance minimale de la pièce (MA) est mise en oeuvre par rapport aux emplacements alternatives (56) d'imbrication et par rapport aux lignes de découpe (10).

10. Procédure (39) selon l'une des revendications précédentes, dans laquelle l'espace de recherche (55) est déployé de manière à ce que
dans un emplacement alternatif (56), le nouvel espace partiel (9A, 9B, ...) inséré présente dans au moins une direction une distance plus grande par rapport à un espace partiel (9A, 9B, ...) déjà inséré que le nouvel espace partiel (9A, 9B, ...) inséré à l'emplacement de départ (54), et/ou
dans un emplacement alternatif (56), le nouvel espace partiel (9A, 9B, ...) inséré est disposé de manière décalée dans au moins une direction par rapport à l'emplacement de départ (54) et est sans chevauchement par rapport aux espaces partiels (9A, 9B, ...) déjà insérés.

11. Procédure (39) selon l'une des revendications précédentes, dans laquelle au moins une direction d'approche (53A, 53B) est associée à la directive d'agencement et l'espace de recherche local (55) est déployé de manière à ce que dans un emplacement alternatif (56), le nouvel espace partiel (9A, 9B, ...) inséré soit disposé de manière décalée par rapport à l'emplacement de départ (54) dans une direction (59) opposée à au moins une des directions d'approche (53A, 53B).

12. Procédure (39) selon l'une des revendications précédentes, dans laquelle un agencement initial du premier espace partiel (9A, 9B, ...) est adapté aux données de position par une opération de translation et/ou de rotation à l'aide de l'évaluation impliquant les données de position.

13. Procédure (39) selon l'une des revendications précédentes, avec en outre
la capture des données de position par un système de capteur de la machine-outil à banc plat, un système de capteur optique et/ou un système de capteur à ultrasons.

14. Procédure (71) pour déterminer un plan d'imbrication orienté procédé de découpe (79A) pour une commande d'un procédé de découpe d'une machine-outil à banc plat (1) destinée à découper des pièces (9) à partir d'une feuille de matériau (7), le plan d'imbrication orienté procédé de découpe (79A) comprenant un agencement sans chevauchement des espaces partiels (9A, 9B, ...) correspondants aux pièces (9) dans un espace de planification (23) bidimensionnel ainsi qu'un agencement spatial d'espaces d'appui (27) prédéterminés, les espaces d'appui (27) correspondant à des zones de surfaces de support de la feuille de matériau (7), qui sont soutenues pendant le procédé de découpe, incluant les étapes :
mise à disposition d'une pluralité de séquences d'ordre d'insertion des espaces partiels (9A, 9B, ...), les séquences d'ordre d'insertion représentant les gènes d'une première génération d'un algorithme évolutif,
générer un plan d'imbrication (49A) pour chacune des séquences d'ordre d'insertion conformément à une procédure selon l'une des revendications 1 à 13, de sorte que dans les plans d'imbrication (49A), les espaces partiels (9A, 9B, ...) soient disposés aux emplacements de découpe (58) définies conformément pour chaque séquence d'ordre d'insertion respective,
créer une évaluation globale pour chacun des plans d'imbrication (49A) basée sur les évaluations de densité de placement et au moins une évaluation incluant les données de position des emplacements de découpe (58) de chaque plan d'imbrication (49A), les évaluations globales représentant l'application d'une fonction de fitness aux gènes de l'algorithme évolutif,
créer de manière répétée d'autres séquences d'ordre d'insertion par mutation, croisement et/ou sélection de séquences d'ordre d'insertion existantes en utilisant les évaluations globales existantes, générer d'autres plans d'imbrication (49A) conformément à une procédure selon l'une des revendications 1 à 13, et créer d'autres évaluations globales pour les autres séquences d'ordre d'insertion, et
comparer les évaluations globales pour sélectionner le plan d'imbrication orienté procédé de découpe (79A) parmi l'ensemble des plans d'imbrication (49A) générés.
